# EUROPEAN PATENT APPLICATION

(11) **EP 4 819 737 A1**
(43) Date of publication of application: **07.10.2026**
(21) Application number: 24902574.3
(22) Date of filing: 28.11.2024
(51) Int. Cl.: H04W 72/21, H04W 72/23

(54) **COMMUNICATION METHOD AND APPARATUS**

(30) Priority: 15.12.2023 CN 202311735352
(71) Applicant: Huawei Technologies Co., Ltd., Shenzhen, Guangdong 518129 (CN)
(72) Inventor: WANG, Ruihua, Shenzhen, Guangdong 518129 (CN); WANG, Fan, Shenzhen, Guangdong 518129 (CN)
(74) Representative: Gill Jennings & Every LLP
(86) International application number: PCT/CN2024/135252
(87) International publication number: WO 2025/124152

(57) **Abstract**

A communication method and apparatus are provided to reduce inter-user interference in communication. The method includes: A first communication apparatus obtains indication information of a first sequence, where a sequence set corresponding to the first sequence satisfies: a maximum value of a square of an inner product of any two sequences in the sequence set is equal to a first value, and the first value is associated with *N and K,* where *N* represents a quantity of sequences in the sequence set, and K represents a length of a sequence in the sequence set; and the first communication apparatus transmits a first signal with a second communication apparatus, where the first signal corresponds to the first sequence.

## Description

### CROSS-REFERENCE TO RELATED APPLICATIONS

This application claims priority to Chinese Patent Application No. 202311735352.7, filed with the China National Intellectual Property Administration on December 15, 2023 and entitled "COMMUNICATION METHOD AND APPARATUS", which is incorporated herein by reference in its entirety.

### TECHNICAL FIELD

This application relates to the field of mobile communication technologies, and in particular, to a communication method and apparatus.

### BACKGROUND

Non-orthogonal multiple access (non-orthogonal multiple access, NOMA) is an important research topic of the 3rd Generation Partnership Project (3rd generation partnership project, 3GPP) protocols. Compared with traditional orthogonal multiple access (orthogonal multiple access, OMA) schemes, NOMA can provide network services for more users. Potential value scenarios of NOMA include but are not limited to transmission scenarios such as massive connectivity, large uplink packets, and grant-free (grant-free). Inter-user interference is inevitable at a NOMA receive end.

Currently, how to reduce inter-user interference is a problem to be urgently resolved in the communications field.

### SUMMARY

This application provides a communication method and apparatus, to reduce inter-user interference in communication.

According to a first aspect, a communication method is provided. The method may be implemented by a first communication apparatus. The first communication apparatus may be configured to send a signal. For example, the first communication apparatus may be a terminal device or an access network device (or may be replaced with a network device such as a base station). Alternatively, the first communication apparatus may be a component in a terminal device or a component in an access network device. The component in this application may include, for example, at least one of a chip, a chip system, a processor, a transceiver, a processing unit, or a transceiver unit. For example, an execution body is the first communication apparatus. The communication method provided in this application may include the following steps: The first communication apparatus obtains indication information of a first sequence, where a sequence set corresponding to the first sequence satisfies: a maximum value of a square of an inner product of any two sequences in the sequence set is equal to a first value, and the first value is associated with *N* and *K*, where *N* represents a quantity of sequences in the sequence set, and *K* represents a length of a sequence in the sequence set; and the first communication apparatus transmits a first signal with a second communication apparatus, where the first signal corresponds to the first sequence.

Based on the method shown in the first aspect, the first communication apparatus may determine the first sequence based on the indication information of the first sequence, and send the first signal corresponding to the first sequence. The first sequence corresponds to the sequence set, and a sequence set that satisfies the foregoing condition may be an equiangular tight frame (equiangular tight frame, ETF) sequence group. For example, the first sequence may be a sequence determined based on the ETF sequence group. For another example, the first sequence may be a sequence in the ETF sequence group, for example, referred to as an ETF sequence. It may be learned from characteristics of the ETF sequence group that, when a plurality of users separately use different sequences in the ETF sequence group to send signals, a maximum value of interference between the plurality of users is less than a maximum value of inter-user interference when the plurality of users separately use other sequences. Therefore, when the users use the first sequence corresponding to the ETF sequence group to transmit signals, the inter-user interference may be reduced. Therefore, the communication method may reduce inter-user transmission interference.

Optionally, the first communication apparatus may send the first signal to the second communication apparatus, or the second communication apparatus may send the first signal to the first communication apparatus.

In a possible implementation, any sequence in the sequence set corresponds to one column of elements in a first matrix, where the first matrix is formed by *K* rows of elements in a second matrix, the second matrix is an *N*-order discrete Fourier transform (discrete Fourier transform, DFT) matrix, both *K* and N are positive integers, *N* is greater than 1, and K is less than or equal to N; and the K rows of elements satisfy the following condition: modulo *N* values of differences between any two of indexes in the second matrix form a second sequence, and values in the second sequence are positive integers greater than or equal to 1 and less than N; and in the positive integers greater than or equal to 1 and less than *N*, each positive integer occurs a same quantity of times in the second sequence.

Based on this implementation, the first matrix may be obtained by extracting the K rows of elements from the second matrix. Each column of elements of the first matrix is used as one sequence in the sequence set. Therefore, the sequence set may be accurately determined. Indexes of the K rows of elements in the second matrix form a difference set (difference set).

In a possible implementation, the first sequence is one column of elements in the first matrix; or the first sequence is a sequence in the sequence set. Based on this implementation, the first sequence may be a sequence in the ETF sequence group, and in this case, the inter-user interference is the lowest. Optionally, the first sequence may be obtained after sequence normalization is performed on one column of elements in the first matrix. In a sequence normalization process, a sequence normalization coefficient may be multiplied by each element.

In a possible implementation, the first sequence is one column of elements in a third matrix, the third matrix is a matrix obtained by performing a tensor product operation between the first matrix and a fourth matrix, and the fourth matrix is a matrix that satisfies a Welch (Welch) bound (bound) condition. Alternatively, any sequence in the sequence set corresponds to one column of elements in a first matrix, the first sequence is a sequence in a second sequence set, and any sequence in the second sequence set is one column of elements in a third matrix. Based on this implementation, the third matrix may be a matrix obtained after a tensor product operation is performed on an ETF matrix (namely, the first matrix) and a matrix (which may be referred to as a WBE matrix) (namely, the fourth matrix) that achieves a Welch bound, and the first sequence may be a sequence formed by one column of elements in the third matrix. A quantity of rows included in the third matrix is at least twice a quantity of rows included in the first matrix. Therefore, a length of a sequence may be extended to meet different transmission rate requirements. In addition, a sequence obtained after length extension is at least a sequence in a WBE sequence group. In other words, the sequence obtained after length extension satisfies a Welch bound condition, and still has relatively low inter-user interference. Optionally, the first sequence may be obtained after sequence normalization is performed on one column of elements in the third matrix.

In a possible implementation, the fourth matrix is an orthogonal matrix. Therefore, efficient sequence length extension may be implemented. For example, the fourth matrix is $\left(\begin{matrix}1 & 1 \\ 1 & - 1\end{matrix}\right)$.

In a possible implementation, the first value is equal to $\frac{N - K}{K \left(N-1\right)}$. When the first value is $\frac{N - K}{K \left(N-1\right)}$, the sequence set is an ETF sequence group. Therefore, an effect of reducing inter-user interference may be optimal. It may be understood that, that the first value may be represented in another form is not limited in this application. For example, the foregoing expression is properly transformed, for example, a constant term is added and/or a coefficient is multiplied.

In a possible implementation, the first matrix is an ETF matrix, and in this case, the sequence set is an ETF sequence group. Therefore, an effect of reducing inter-user interference may be optimal.

In a possible implementation, when *K =* 2, and *N =* 3, indexes of the *K* rows of elements in the second matrix are 2 and 3; or
when *K =* 3, and *N* = 7, indexes of the *K* rows of elements in the second matrix are 2, 3, and 5, respectively; or
when *K* = 4, and *N* = 13, indexes of the *K* rows of elements in the second matrix are 1, 2, 4, and 10, respectively; or
when *K = 5, and N =* 11, indexes of the *K* rows of elements in the second matrix are 2, 4, 5, 6, and 10, respectively; or
when *K = 7,* and *N =* 15, indexes of the *K* rows of elements in the second matrix are 1, 2, 3, 5, 6, 9, and 11, respectively; or
when *K* = 9, and *N =* 19, indexes of the *K* rows of elements in the second matrix are 2, 5, 6, 7, 8, 10, 12, 17, and 18, respectively; or
when *K =* 11, and *N* = 23, indexes of the *K* rows of elements in the second matrix are 2, 3, 4, 5, 6, 9, 10, 13, 14, 17, and 19, respectively; or
when *K =* 13, and *N* = 40, indexes of the *K* rows of elements in the second matrix are 1, 2, 4, 6, 10, 16, 23, 26, 27, 28, 35, 36, and 39, respectively; or
when *K = 5,* and *N =* 21, indexes of the *K* rows of elements in the second matrix are 4, 7, 8, 13, and 15, respectively; or
when *K =* 6, and *N =* 31, indexes of the *K* rows of elements in the second matrix are 2, 6, 12, 25, 26, and 28, respectively; or
when *K* = 9, and *N =* 37, indexes of the *K* rows of elements in the second matrix are 2, 8, 10, 11, 13, 17, 27, 34, and 35, respectively; or
when *K* = 8, and *N =* 57, indexes of the *K* rows of elements in the second matrix are 2, 7, 8, 10, 20, 39, 43, and 50, respectively; or
when *K* = 9, and *N =* 73, indexes of the *K* rows of elements in the second matrix are 18, 34, 35, 46, 54, 60, 64, 67, and 69, respectively; or
when *K =* 10, and *N* = 91, indexes of the *K* rows of elements in the second matrix are 1, 9, 12, 25, 29, 34, 35, 71, 73, and 85, respectively; or
when *K =* 12, and *N* = 133, indexes of the *K* rows of elements in the second matrix are 2, 11, 12, 14, 28, 32, 69, 76, 84, 111, 116, and 122, respectively.

Based on this implementation, the K rows of elements may be extracted from the second matrix by using the indexes of the K rows of elements in the second matrix as the first base station, in other words, the sequence set and the first sequence are accurately and efficiently determined.

In a possible implementation, when *K = 2* and *N =* 3, the sequence set includes the following sequences 1 to 3:

| Sequence 1 | Sequence 2 | Sequence 3 |
|---|---|---|
| 0.5774+0i | 0.5774+0i | 0.5774+0i |
| 0.5774+0i | -0.2887+0.5000i | -0.2887-0.5000i |

; when *K =* 3 and *N =* 7, the sequence set includes the following sequences 1 to 7:

| Sequence 1 | Sequence 2 | Sequence 3 | Sequence 4 | Sequence | Sequence 6 | Sequence 7 |
|---|---|---|---|---|---|---|
| 0.3780+0i | 0.2357+ 0.2955i | -0.0841+ 0.3685i | -0.3405+ 0.1640i | -0.3405-0.1640i | -0.0841-0.3685i | 0.2357-0.2955i |
| 0.3780+0i | -0.0841+ 0.3685i | -0.3405-0.1640i | 0.2357-0.2955i | 0.2357+ 0.2955i | -0.3405+ 0.1640i | -0.0841-0.3685i |
| 0.3780+0i | -0.3405-0.1640i | 0.2357+ 0.2955i | -0.0841-0.3685i | -0.0841+ 0.3685i | 0.2357-0.2955i | -0.3405+ 0.1640i |

; when *K =* 4 and *N =* 13, the sequence set includes the following sequences 1 to 13:

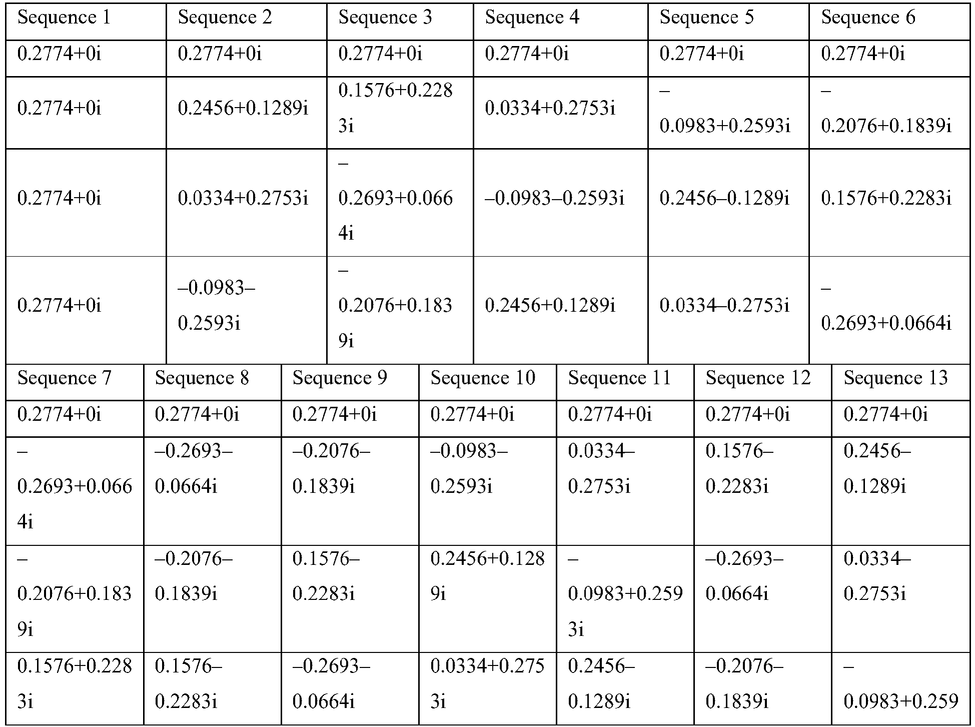

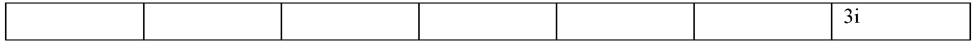

; and
when K = 6 and *N* = 31, the sequence set includes the following sequences 1 to 31:

| Sequence 1 | Sequence 2 | Sequence 3 | Sequence 4 | Sequence 5 | Sequence 6 | |
|---|---|---|---|---|---|---|
| 0.1796+0i | 0.1759+0.036 2i | 0.1650+0.070 8i | 0.1474+0.102 6i | 0.1237+0.130 2i | 0.0950+0.1524i | |
| 0.1796+0i | 0.0950+0.152 4i | - 0.0791+0.161 3i | - 0.1787+0.018 2i | -0.1099-0.1420i | 0.0624-0.1684i | |
| 0.1796+0i | - 0.1099+0.142 0i | -0.0450-0.1739i | 0.1650+0.070 8i | - 0.1570+0.087 2i | 0.0272-0.1775i | |
| 0.1796+0i | 0.0272-0.1775i | -0.1714-0.0538i | - 0.0791+0.161 3i | 0.1474+0.102 6i | 0.1237-0.1302i | |
| 0.1796+0i | 0.0624-0.1684i | -0.1363-0.1170i | - 0.1570+0.087 2i | 0.0272+0.177 5i | 0.1759+0.0362i | |
| 0.1796+0i | 0.1237-0.1302i | -0.0091-0.1794i | -0.1363-0.1170i | - 0.1787+0.018 2i | -0.1099+0.1420i | |

| Sequence 7 | Sequence 8 | Sequence 9 | Sequence 10 | Sequence 11 | Sequence 12 | |
|---|---|---|---|---|---|---|
| 0.0624+0.168 4i | 0.0272+0.177 5i | - 0.0091+0.179 4i | - 0.0450+0.173 9i | - 0.0791+0.161 3i | -0.1099+0.1420i | |
| 0.1759-0.0362i | 0.1237+0.130 2i | - 0.0450+0.173 9i | - 0.1714+0.053 8i | -0.1363-0.1170i | 0.0272-0.1775i | |
| 0.1237+0.130 2i | - 0.1787+0.018 2i | 0.0950-0.1524i | 0.0624+0.168 4i | -0.1714-0.0538i | 0.1474-0.1026i | |
| -0.1099-0.1420i | - 0.1570+0.087 2i | 0.0624+0.168 4i | 0.1759-0.0362i | -0.0091-0.1794i | -0.1787-0.0182i | |
| 0.0950-0.1524i | -0.1099-0.1420i | - 0.1714+0.053 8i | - 0.0091+0.179 4i | 0.1650+0.070 8i | 0.1237-0.1302i | |
| 0.0272+0.177 5i | 0.1474+0.102 6i | 0.1759-0.0362i | 0.0950-0.1524i | -0.0450-0.1739i | -0.1570-0.0872i | |

| Sequence 13 | Sequence 14 | Sequence 15 | Sequence 16 | Sequence 17 | Sequence 18 | |
|---|---|---|---|---|---|---|
| -0.1363+ | - | - | - | -0.1787- | -0.1714-0.0538i | |
| 0.117i | 0.1570+0.087 2i | 0.1714+0.053 8i | 0.1787+0.018 2i | 0.0182i | | |
| 0.1650-0.0708i | 0.1474+0.102 6i | - 0.0091+0.179 4i | - 0.1570+0.087 2i | -0.1570-0.0872i | -0.0091-0.1794i | |
| - 0.0091+0.179 4i | -0.1363-0.1170i | 0.1759-0.0362i | - 0.0791+0.161 3i | -0.0791-0.1613i | 0.1759+0.0362i | |
| - 0.0450+0.173 9i | 0.1650+0.070 8i | 0.0950-0.1524i | -0.1363-0.1170i | - 0.1363+0.117 0i | 0.0950+0.1524i | |
| -0.0791-0.1613i | - 0.1787+0.018 2i | - 0.0450+0.173 9i | 0.1474+0.102 6i | 0.1474-0.1026i | -0.0450-0.1739i | |
| - 0.1714+0.053 8i | - 0.0791+0.161 3i | 0.0624+0.168 4i | 0.1650+0.070 8i | 0.1650-0.0708i | 0.0624-0.1684i | |

| Sequence 19 | Sequence 20 | Sequence 21 | Sequence 22 | Sequence 23 | Sequence 24 | |
|---|---|---|---|---|---|---|
| -0.157-0.0872i | -0.1363-0.1170i | -0.1099-0.1420i | -0.0791-0.1613i | -0.0450-0.1739i | -0.0091-0.1794i | |
| 0.1474-0.1026i | 0.1650+0.070 8i | 0.0272+0.177 5i | - 0.1363+0.117 0i | -0.1714-0.0538i | -0.0450-0.1739i | |
| - 0.1363+0.117 0i | -0.0091-0.1794i | 0.1474+0.102 6i | - 0.1714+0.053 8i | 0.0624-0.1684i | 0.0950+0.1524i | |
| 0.1650-0.0708i | -0.0450-0.1739i | - 0.1787+0.018 2i | - 0.0091+0.179 4i | 0.1759+0.036 2i | 0.0624-0.1684i | |
| -0.1787-0.0182i | - 0.0791+0.161 3i | 0.1237+0.130 2i | 0.1650-0.0708i | -0.0091-0.1794i | -0.1714-0.0538i | |
| -0.0791-0.1613i | -0.1714-0.0538i | - 0.1570+0.087 2i | - 0.0450+0.173 9i | 0.0950+0.152 4i | 0.1759+0.0362i | |

| Sequence 25 | Sequence 26 | Sequence 27 | Sequence 28 | Sequence 29 | Sequence 30 | Sequence 31 |
|---|---|---|---|---|---|---|
| 0.0272-0.1775i | 0.0624-0.1684i | 0.0950-0.1524i | 0.1237-0.1302i | 0.1474-0.1026i | 0.1650-0.0708i | 0.1759-0.0362i |
| 0.1237-0.1302i | 0.1759+0.036 2i | 0.0624+0.168 4i | - 0.1099+0.142 0i | -0.1787-0.0182i | -0.0791-0.1613i | 0.0950-0.1524i |
| -0.1787-0.0182i | 0.1237-0.1302i | 0.0272+0.177 5i | -0.1570-0.0872i | 0.1650-0.0708i | - 0.0450+0.17 39i | -0.1099-0.1420i |
| -0.1570-0.0872i | - 0.1099+0.142 0i | 0.1237+0.130 2i | 0.1474-0.1026i | -0.0791-0.1613i | - 0.1714+0.05 38i | 0.0272+0.177 5i |
| - 0.1099+0.142 0i | 0.0950+0.152 4i | 0.1759-0.0362i | 0.0272-0.1775i | -0.1570-0.0872i | - 0.1363+0.11 70i | 0.0624+0.168 4i |
| 0.1474-0.1026i | 0.0272-0.1775i | -0.1099-0.1420i | -0.1787-0.0182i | - 0.1363+0.117 0i | - 0.0091+0.17 94i | 0.1237+0.130 2i |

.

Based on this implementation, the sequence set and/or the first sequence may be determined through table lookup based on values of *K* and *N*, to accurately and efficiently determine the first sequence.

In a possible implementation, the indication information of the first sequence includes an index of the first sequence in the sequence set.

Based on this implementation, the first sequence may be flexibly and efficiently indicated by using a sequence index. Correspondingly, the first communication apparatus may determine the first sequence from the sequence set based on the index.

In a possible implementation, the first communication apparatus may further obtain the indication information of the sequence set.

Based on this implementation, flexible and efficient indication of the sequence set may be implemented by using an indication information index of the sequence set.

In a possible implementation, the indication information of the sequence set includes *N* and K.

Based on this implementation, the indication information of the sequence set may be *N* and K. When there are a plurality of sequence sets, sequence sets do not need to be uniformly numbered, thereby reducing management complexity. In addition, sequence sets do not need to be indicated by using unified numbers, thereby reducing overheads of indication of the sequence set.

According to a second aspect, a communication method is provided. The method may be implemented by a second communication apparatus. The second communication apparatus may be configured to receive a signal. For example, the second communication apparatus may be a terminal device or an access network device (or may be replaced with a network device such as a base station). Alternatively, the second communication apparatus may be a component in a terminal device or a component in an access network device. The component in this application may include, for example, at least one of a chip, a chip system, a processor, a transceiver, a processing unit, or a transceiver unit. For example, an execution body is the second communication apparatus. The communication method provided in this application may include the following steps: The second communication apparatus obtains indication information of a first sequence, where a sequence set corresponding to the first sequence satisfies: a maximum value of a square of an inner product of any two sequences in the sequence set is equal to a first value, and the first value is associated with *N* and K , where *N* represents a quantity of sequences in the sequence set, and K represents a length of a sequence in the sequence set; and the second communication apparatus transmits a first signal with a first communication apparatus, where the first signal corresponds to the first sequence.

For each possible implementation of the second aspect, refer to a corresponding possible implementation of the first aspect. Details are not described again.

According to a third aspect, a communication apparatus is provided. The apparatus may implement the method according to any one of the first aspect and the second aspect and the possible implementations of the first aspect and the second aspect. The apparatus has a function of the first communication apparatus or the second communication apparatus. The apparatus is, for example, a terminal device, a functional module in the terminal device, a network device, or a functional module in the network device.

In an optional implementation, the apparatus may include modules that one-to-one correspond to the methods/operations/steps/actions described in any one of the first aspect and the second aspect and the possible implementations of the first aspect and the second aspect. The module may be a hardware circuit or software, or may be implemented by a hardware circuit in combination with software. In an optional implementation, the apparatus includes a processing unit (sometimes also referred to as a processing module) and a communication unit (sometimes also referred to as a transceiver module, a communication module, and the like). The transceiver unit may implement a sending function and a receiving function. When implementing the sending function, the transceiver unit may be referred to as a sending unit (sometimes also referred to as a sending module). When implementing the receiving function, the transceiver unit may be referred to as a receiving unit (sometimes also referred to as a receiving module). The sending unit and the receiving unit may be a same functional module, the functional module is referred to as the transceiver unit, and the functional module may implement the sending function and the receiving function. Alternatively, the sending unit and the receiving unit may be different functional modules, and the transceiver unit is a general term for these functional modules.

For example, when the apparatus is configured to perform the method described in any possible implementation of the first aspect to the second aspect, the apparatus may include the communication unit and the processing unit.

According to a fourth aspect, an embodiment of this application further provides a communication apparatus, including a processor, configured to execute a computer program (or computer-executable instructions) stored in a memory. When the computer program (or the computer-executable instructions) is executed, the apparatus is enabled to perform the method according to any one of the first aspect and the second aspect and the possible implementations of the first aspect and the second aspect.

In a possible implementation, the processor and the memory are integrated together.

In another possible implementation, the memory is located outside the communication apparatus.

The communication apparatus further includes a communication interface. The communication interface is for communication between the communication apparatus and another device, for example, for data and/or signal sending or receiving. For example, the communication interface may be a transceiver, a circuit, a bus, a module, or another type of communication interface.

According to a fifth aspect, a computer-readable storage medium is provided, where the computer-readable storage medium is configured to store a computer program or instructions, and when the computer program or the instructions are run, the method according to any one of the first aspect and the second aspect and the possible implementations of the first aspect and the second aspect and the method according to any one of the possible implementations of the first aspect and the second aspect are implemented.

According to a sixth aspect, a computer program product including instructions is provided. When the computer program product is run on a computer, the method according to any one of the first aspect and the second aspect and the possible implementations of the first aspect and the second aspect is implemented.

According to a seventh aspect, an embodiment of this application further provides a communication apparatus, configured to perform the method according to any one of the first aspect and the second aspect and the possible implementations of the first aspect and the second aspect.

According to an eighth aspect, a chip system is provided. The chip system includes a logic circuit (which may alternatively be understood as that the chip system includes a processor, and the processor may include a logic circuit and the like), and may further include an input/output interface. The input/output interface may be configured to input a message, or may be configured to output a message. The input/output interface may be a same interface, that is, the same interface can implement both a sending function and a receiving function. Alternatively, the input/output interface includes an input interface and an output interface. The input interface is configured to implement a receiving function, that is, configured to receive a message; and the output interface is configured to implement a sending function, that is, configured to send a message. The logic circuit may be configured to perform an operation other than the sending function and the receiving function in the method in any one of the first aspect and the second aspect and the possible implementations of the first aspect and the second aspect. The logic circuit may be further configured to transmit a message to the input/output interface, or receive a message from another communication apparatus through the input/output interface. The chip system may be configured to implement the method according to any one of the first aspect and the second aspect and the possible implementations of the first aspect and the second aspect. The chip system may include a chip, or may include a chip and another discrete component.

Optionally, the chip system may further include a memory, and the memory may be configured to store instructions. The logic circuit may invoke the instructions stored in the memory to implement a corresponding function.

According to a ninth aspect, a communication method is provided. The communication method may include the method implemented by a first communication apparatus according to any one of the first aspect and the possible implementations of the first aspect, and the method implemented by a second communication apparatus according to any one of the second aspect and the possible implementations of the second aspect.

According to a tenth aspect, a communication system is provided. The communication system may include a first communication apparatus and a second communication apparatus. The first communication apparatus may be configured to implement the method according to any one of the first aspect and the possible implementations of the first aspect, and the second communication apparatus may be configured to implement the method according to any one of the second aspect and the possible implementations of the second aspect.

For technical effects brought by the third aspect to the tenth aspect, refer to descriptions of beneficial effects of corresponding solutions in the first aspect to the second aspect. Details are not described herein again.

### BRIEF DESCRIPTION OF DRAWINGS

FIG. 1 is a diagram of an architecture of a wireless communication system according to an embodiment of this application;
FIG. 2 is a diagram of a sequence usage manner in a NOMA scenario according to an embodiment of this application;
FIG. 3 is a schematic flowchart of a communication method according to an embodiment of this application;
FIG. 4 is a diagram of a structure of a communication apparatus according to an embodiment of this application; and
FIG. 5 is a diagram of a structure of another communication apparatus according to an embodiment of this application.

### DESCRIPTION OF EMBODIMENTS

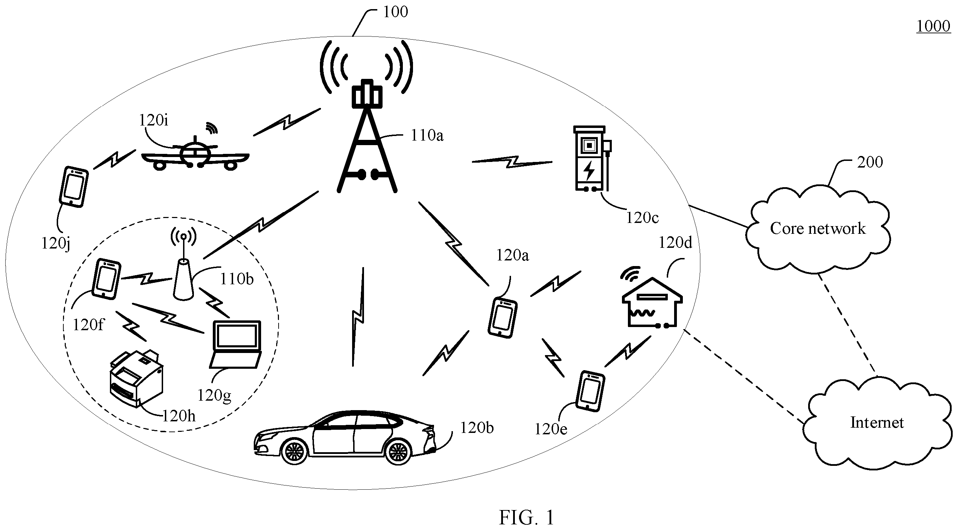

For ease of understanding of embodiments of this application, an application scenario to which this application is applicable is described by using an architecture of a communication system shown in FIG. 1 as an example. FIG. 1 is a diagram of a possible and non-limiting system. As shown in FIG. 1, the communication system 1000 includes a radio access network (radio access network, RAN) 100 and a core network (core network, CN) 200. The RAN 100 includes at least one network device (for example, 110a and 110b in FIG. 1, which are collectively referred to as 110) and at least one terminal device (for example, 120a to 120j in FIG. 1, which are collectively referred to as 120). The RAN 100 may alternatively include another RAN node, for example, a wireless relay device and/or a wireless backhaul device (not shown in FIG. 1). The terminal device 120 is connected to the network device 110 in a wireless manner. The network device 110 is connected to the core network 200 in a wireless or wired manner. A core network device in the core network 200 and the network device 110 in the RAN 100 may be different physical devices, or may be a same physical device that integrates a logical function of the core network and a logical function of the radio access network.

The RAN 100 may be a cellular system related to the 3rd generation partnership project (3rd generation partnership project, 3GPP), for example, a 4th generation (4th generation, 4G) or 5th generation (5th generation, 5G) mobile communication system, or a system evolved after 5G (for example, a 6th generation (6th generation, 6G) mobile communication system). The RAN 100 may alternatively be an open access network (open RAN, O-RAN, or ORAN), a cloud radio access network (cloud radio access network, CRAN), or a wireless fidelity (wireless fidelity, Wi-Fi) system. Alternatively, the RAN 100 may be a communication system that integrates the foregoing two or more systems.

An apparatus provided in embodiments of this application may be used in the network device 110 or the terminal device 120. It may be understood that FIG. 1 shows only a possible architecture of the communication system to which embodiments of this application may be applied. In another possible scenario, the architecture of the communication system may alternatively include another device.

Another communication system to which embodiments of this application are applied may include a first communication apparatus and a second communication apparatus.

In an implementation method, the first communication apparatus is a network device or a module used in a network device, the second communication apparatus is a terminal device or a module used in a terminal device, and the network device is, for example, an access network device. The first communication apparatus communicates with the second communication apparatus by using an air interface.

In another implementation method, the first communication apparatus is a terminal device or a module used in a terminal device, and the second communication apparatus is a network device or a module used in a network device. The first communication apparatus communicates with the second communication apparatus by using an air interface.

In another implementation method, the first communication apparatus is a network device or a module used in a network device, and the second communication apparatus is a network device or a module used in a network device. The first communication apparatus communicates with the second communication apparatus by using an air interface or in a wired manner.

In another implementation method, the first communication apparatus is a terminal device or a module used in a terminal device, and the second communication apparatus is a terminal device or a module used in a terminal device. The first communication apparatus communicates with the second communication apparatus by using an air interface.

Certainly, in embodiments of this application, the first communication apparatus and the second communication apparatus may alternatively be devices of another type. For example, the first communication apparatus may be a device such as a cloud device or a cloud server, and the second communication apparatus is a device such as a cloud device or a cloud server. This is not limited in this application.

In embodiments of this application, the terminal device may be a device having a wireless transceiver function, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may be deployed on land, including being deployed indoors or outdoors, or in a handheld manner or a vehicle-mounted manner; or may be deployed on water (for example, on a ship); or may be deployed in the air (for example, on an airplane, a balloon, or a satellite). The terminal device may be a cellular phone, a mobile phone (mobile phone), a tablet computer (pad), a wireless data card, a wireless modem, a satellite terminal, a device mounted on a vehicle (for example, a car, a bicycle, an electric vehicle, an airplane, a ship, a train, or a high-speed railway), a mechanical arm, a workshop device, a wearable device (for example, a smart watch, a smart band, or a pedometer), an uncrewed aerial vehicle, a robot, a smart point of sale (point of sale, POS) machine, customer-premises equipment (customer-premises equipment, CPE), a computer having a wireless transceiver function, a virtual reality (virtual reality, VR) terminal device, an augmented reality (augmented reality, AR) terminal device, a terminal device in industrial control (industrial control), a terminal device in self-driving (self-driving), a terminal device in telemedicine (remote medical), a terminal device in a smart grid (smart grid), a terminal in transportation safety (transportation safety), a terminal device in a smart city (smart city), and a terminal in a smart home (smart home) (for example, a smart home device such as a refrigerator, a television, an air conditioner, and a meter). The terminal device may alternatively be another device having a terminal function. A form of the terminal device is not limited in embodiments of this application. An apparatus configured to implement a function of the terminal device may be a terminal device, or may be an apparatus, for example, a chip system, that can support the terminal device in implementing the function. The apparatus may be installed in a terminal device or used in conjunction with a terminal device. In this embodiment of this application, the chip system may include a chip, or may include a chip and another discrete component.

In embodiments of this application, the network device is a device having a wireless transceiver function, and is configured to communicate with the terminal device or another network device. The network device may alternatively be a device, for example, a radio access network (radio access network, RAN) device or a node, that can connect the terminal device to a wireless network. In embodiments of this application, the network device may include various forms of base stations, for example, a base station (base station), an evolved base station (evolved NodeB, eNodeB), a next generation base station (next generation NodeB, gNB), a macro base station, a micro base station (which is also referred to as a small cell), a relay station, an access point, a device that implements a base station function in a communication system evolved after a 5th generation (5th generation, 5G) technology, an access point (access point, AP) in a wireless local area network (wireless local area network, WLAN) system, an integrated access and backhaul (integrated access and backhaul, IAB) node, a transmission and reception point (transmission and reception point, TRP), a transmission point (transmission point, TP), a mobile switching center, or a device that undertakes a base station function in device-to-device (Device-to-Device, D2D) communication, vehicle-to-everything (vehicle-to-everything, V2X) communication, or machine-to-machine (machine-to-machine, M2M) communication. The network device may further include a network device in a non-terrestrial network (non-terrestrial network, NTN) communication system, in other words, may be deployed on a high-altitude platform or a satellite. In some possible scenarios, different network devices respectively implement a part of functions of the base station. For example, the network device may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may also have different names, but a person skilled in the art may understand meanings thereof. For example, in an open radio access network (open RAN, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

A form of the network device is not limited in embodiments of this application. An apparatus for implementing a function of the network device may be a network device, or may be an apparatus, for example, a chip system, that can support the network device in implementing the function. The apparatus may be installed in a network device or used in conjunction with a network device.

It may be understood that in this application, communication between the network device and the terminal device, communication between network devices, and communication between terminal devices may be performed by using a licensed spectrum, or may be performed by using an unlicensed spectrum, or may be performed by using both a licensed spectrum and an unlicensed spectrum. In addition, communication between the network device and the terminal device, communication between network devices, and communication between terminal devices may be performed by using a spectrum below 6 gigahertz (gigahertz, GHz), for example, by using a 700/900 mega hertz (mega hertz, MHz) frequency band or a 2.1/2.6/3.5-GHz frequency band, or by using a spectrum above 6 GHz, for example, by using a millimeter wave or a tera hertz (tera hertz, THz) wave, or by using a spectrum below 6 GHz and a spectrum above 6 GHz at the same time. A spectrum resource for wireless communication is not limited in embodiments of this application.

In embodiments of this application, a function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, intelligent transportation, and smart city. The function of the terminal device may alternatively be performed by a module (for example, a chip or a modem) in the terminal device, or may be performed by an apparatus including the function of the terminal device.

In an evolution process of the communication system, a high throughput and massive connectivity have always been core challenges for a wireless communication network. To cope with the foregoing challenges, 5G communication proposes applications such as enhanced mobile broadband (enhanced mobile broadband, eMBB), ultra-reliable and low latency communication (ultra-reliable and low latency communication, URLLC), and massive machine type communication (massive machine type communication, mMTC) as technical objectives. However, a 6G communication system evolved after 5G will definitely evolve towards a direction such as a larger throughput, a lower latency, higher reliability, a larger number of connections, and higher spectrum utilization.

In wireless communication, data is sent from one device to another device by using radio resources. Physically, the radio resources are classified into time-domain resources and frequency-domain resources. When a plurality of users are simultaneously served, because a degree of freedom of the physical radio resources is limited, a problem of how to allocate the physical radio resources among the plurality of users occurs, and the problem is a multiple access (multiple access, MA) problem. From the perspective of resource reuse, the MA technology can be classified into OMA and NOMA. In this application, "orthogonal" means that each user has an independent degree of freedom in at least one resource domain (for example, time domain, frequency domain, code domain, or space domain), in other words, data transmission of one user is not affected by another user in the at least one resource domain.

A typical NOMA technology includes sparse code multiple access (sparse code multiple access, SCMA), multi-user shared access (multi-user shared access, MUSA), resource spread multiple access (resource spread multiple access, RSMA), pattern division multiple access (pattern division multiple access, PDMA), interleave-grid multiple access (interleave-grid multiple access, IGMA), interleave-division multiple access (interleave-division multiple access, IDMA), non-orthogonal coded multiple access (non-orthogonal coded multiple access, NCMA), and the like. The technologies use a codebook, a spreading sequence, a sparse mapping sequence, and the like as signatures, and correspondingly, different bit-level operation (bit-level operation) and/or symbol-level operation (symbol-level operation) are used at a NOMA transmit end. The bit-level operation includes user-specific bit-level coding, scrambling, interleaving, and the like (for example, IDMA uses bit-level interleaving as a signature to distinguish users). The symbol-level operation includes user-specific symbol-level spreading, modulation, scrambling, interleaving, and the like.

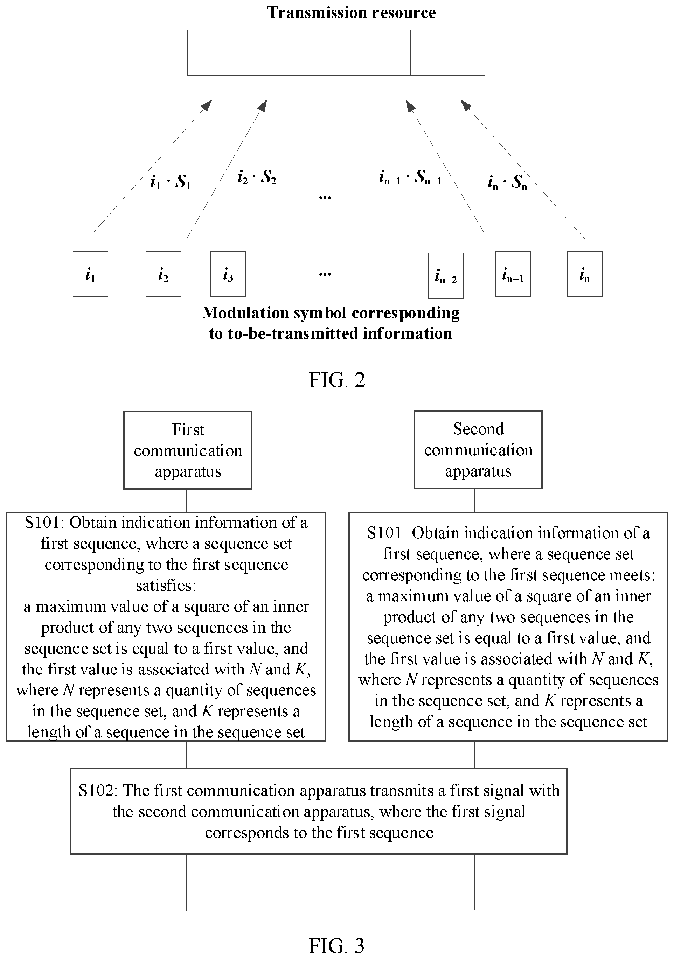

For example, FIG. 2 is a diagram of a dense (dense) spreading scheme. In the scheme, a modulation symbol corresponding to to-be-transmitted information is multiplied by a sequence. S₁, S₂, ..., Sₙ represent an n-length sequence in a NOMA scenario, and modulation symbols i₁, i₂, ..., iₙ corresponding to to-be-transmitted information of a user may be mapped, by using the sequence, to a transmission resource corresponding to the sequence.

Because the NOMA communication technology has a non-orthogonal characteristic, inter-user interference inevitably exists at a NOMA receive end. It may be understood that a usage scenario of the communication method in this application includes but is not limited to a NOMA scenario, and may be further applicable to another transmission scenario in which inter-user interference exists.

How to reduce inter-user interference is a technical problem to be urgently resolved in the communications field.

To resolve the foregoing technical problem, this application provides a communication method. The communication method may be implemented by a first communication apparatus and a second communication apparatus. The first communication apparatus may be used as a signal transmit end, and the second communication apparatus may be used as a signal receive end. In other words, the first communication apparatus may be configured to send a signal, and the second communication apparatus may be configured to receive a signal. In an example, in an uplink communication process, the first communication apparatus may be a terminal device, or may be a component such as a module or a chip in a terminal device, the second communication apparatus may be a network device, or may be a component such as a module or a chip in a network device, and the network device is, for example, a RAN or another access network device. In another example, in a downlink communication process, the first communication apparatus may be a network device, or may be a component such as a module or a chip in a network device, the second communication apparatus may be a terminal device, or may be a component such as a module or a chip in a terminal device. Similarly, it may also be considered that the first communication apparatus may be used as a signal receive end, and the second communication apparatus may be used as a signal transmit and receive end.

The following describes the method with reference to a process shown in FIG. 3.

S101: The first communication apparatus and the second communication apparatus separately obtain indication information of a first sequence.

The first communication apparatus may determine the first sequence based on the indication information of the first sequence. For example, the indication information of the first sequence may be an index of the sequence in a sequence codebook, or the indication information may include the first sequence. The sequence codebook may be indicated by the network device by using configuration information. Correspondingly, when the first sequence needs to be indicated, the network device may indicate an index of the first sequence by using the indication information of the first sequence.

In this application, a sequence set corresponding to the first sequence satisfies:
a maximum value of a square of an inner product of any two sequences in the sequence set is equal to a first value, and the first value is associated with *N* and K , where *N* represents a quantity of sequences in the sequence set, and K represents a length of a sequence in the sequence set.

Optionally, the first value may satisfy expression 1: $\frac{N - K}{K \left(N-1\right)}$. For example, the first value is equal to

It may be understood that the first value may alternatively be represented by using another formula. For example, on the basis of a numerator, a denominator, or an entire expression of the foregoing expression, one or more constants are added or subtracted, and/or multiplied or divided by a specific coefficient to achieve a similar effect.

If represented by using a formula, a sequence in the sequence set may satisfy: ${max}_{i , j} {\left|{x}_{i}⋅{x}_{j}^{∗}\right|}^{2} = \frac{N - K}{K \left(N-1\right)} , i \neq j .$
xᵢ is an *i*^{th} sequence in the sequence set, xⱼ is a *j*^{th} sequence in the sequence set, and ${x}_{i} ⋅ {x}_{j}^{∗}$ represents an inner product of sequences xᵢ and xⱼ.

In other words, the sequence set is an ETF sequence group, and the ETF sequence group may also be referred to as an ETF sequence set. Maximum interference between sequences in the ETF sequence group is minimized, that is, when a plurality of users respectively use different sequences in the ETF sequence group to send signals, a maximum value of interference between the plurality of users is less than a maximum value of inter-user interference when the plurality of users separately use other sequences. Therefore, when different terminal devices separately use different sequences in the same ETF sequence group, mutual interference between different terminal devices may be minimized.

Therefore, the first sequence in this application may be a sequence in the ETF sequence group, or the first sequence may be a sequence determined based on the ETF sequence group.

Optionally, in uplink transmission and/or downlink transmission, the network device may send the indication information of the first sequence to the terminal device, in other words, the network device may indicate the first sequence to the terminal device. The indication information of the first sequence may be included in a radio resource control (radio resource control, RRC) message, a media access control (media access control, MAC) control element (control element, CE), or downlink control information (downlink control information, DCI) that is sent by the network device to the terminal device. For example, the network device may configure a sequence codebook for the terminal device by using the RRC message or the MAC CE, and send the indication information of the first sequence to the terminal device by using the DCI. In this case, the indication information of the first sequence may be an index of the sequence, and indicates a sequence from the sequence codebook. In this application, the first communication apparatus may be a terminal device, and the second communication apparatus may be a network device. Therefore, the second communication apparatus may send the indication information of the first sequence to the first communication apparatus. Alternatively, the first communication apparatus may be a network device, and the second communication apparatus may be a terminal device. Therefore, the first communication apparatus may send the indication information of the first sequence to the second communication apparatus.

In addition, the sequence codebook may alternatively be stored in a local configuration of the terminal device, in other words, the network device does not need to configure the sequence codebook for the terminal device. For example, the terminal device may obtain the sequence codebook based on a factory setting, or obtain the sequence codebook based on a configuration related to a communication protocol.

In an example, in uplink transmission, the network device may send the indication information of the first sequence to the terminal device. In this case, the terminal device may be used as the first communication apparatus, the network device may be used as the second communication apparatus, and the indication information of the first sequence may be sent by the network device to the terminal device. Therefore, in uplink transmission, that the first communication apparatus obtains the indication information of the first sequence may mean that the first communication apparatus receives the indication information of the first sequence from the second communication apparatus. That the second communication apparatus obtains the indication information of the first sequence may mean that the second communication apparatus generates the indication information of the first sequence after allocating the first sequence to the first communication apparatus, or the network device reads the generated indication information of the first sequence.

In another example, in downlink transmission, the network device may still send the indication information of the first sequence to the terminal device. In this case, the network device may be used as the first communication apparatus, and the terminal device may be used as the second communication apparatus. Therefore, in downlink transmission, that the first communication apparatus obtains the indication information of the first sequence may mean that the first communication apparatus generates, after allocating the first sequence to the second communication apparatus, indication information for indicating the first sequence, or the network device reads the generated indication information of the first sequence. That the second communication apparatus obtains the indication information of the first sequence may mean that the second communication apparatus receives the indication information of the first sequence from the first communication apparatus.

In addition, in communication between terminal devices, the first communication apparatus and the second communication apparatus may be different terminal devices. In this case, the first communication apparatus may send the indication information of the first sequence to the second communication apparatus, or the second communication apparatus may send the indication information of the first sequence to the first communication apparatus. In addition, during communication between the terminal devices, the first sequence may alternatively be configured by the network device. In this case, in an implementation of S101, the first communication apparatus and the second communication apparatus may separately receive the indication information of the first sequence from the network device.

S102: The first communication apparatus and the second communication apparatus transmit a first signal based on the indication information of the first sequence.

The first signal corresponds to the first sequence. For example, the first signal may be a signal obtained by performing, based on a dense spreading scheme and based on the first sequence, spreading on to-be-sent information of the first communication apparatus.

It may be understood that the first signal may be transmitted between the first communication apparatus and the second communication apparatus by using an air interface.

For example, both the first communication apparatus and the second communication apparatus have an air interface transmission capability. For example, both the first communication apparatus and the second communication apparatus have a wireless transceiver such as an antenna. In this case, the first communication apparatus may send a first signal by using the wireless transceiver. Correspondingly, the second communication apparatus may receive the first signal by using the wireless transceiver, and perform processing such as demodulation on the first signal, to obtain information carried by the first signal.

In addition, the first communication apparatus and/or the second communication apparatus may be a device or an apparatus that does not have an air interface communication capability, such as a chip. The first communication apparatus and/or the second communication apparatus may perform communication by using a wireless transceiver such as an external antenna. For example, when neither the first communication apparatus nor the second communication apparatus has an air interface communication capability, the first communication apparatus may output a first signal to the antenna by using an interface between the first communication apparatus and the antenna, and the antenna may be configured to send the first signal by using an air interface. Correspondingly, the antenna connected to the second communication apparatus may be configured to receive the first signal transmitted by using an air interface, and transmit the signal to the second communication apparatus by using an interface between the antenna and the second communication apparatus. Then, the second communication apparatus may perform processing such as demodulation on the received signal, to obtain information carried by the first signal.

Based on the process shown in FIG. 3, the first communication apparatus may determine the first sequence based on the indication information of the first sequence, and send the first signal corresponding to the first sequence. The first sequence corresponds to the sequence set, and a sequence set that satisfies the foregoing condition may be an ETF sequence group. For example, the first sequence may be a sequence determined based on the ETF sequence group. For another example, the first sequence may be a sequence in the ETF sequence group, for example, referred to as an ETF sequence. It may be learned from characteristics of the ETF sequence group that, when a plurality of users separately use different sequences in the ETF sequence group to send signals, a maximum value of interference between the plurality of users is less than a maximum value of inter-user interference when the plurality of users separately use other sequences. Therefore, when the users use the first sequence corresponding to the ETF sequence group to transmit signals, the inter-user interference may be reduced. Therefore, the communication method may reduce inter-user interference.

The following describes a manner of determining the sequence set corresponding to the first sequence.

In this application, the ETF sequence set may be constructed based on a difference set.

The difference set is a subset of u = {u₁, u₂, ... , u_{K}} and *Z_{N}* = {1,2, *... , N},* modulo N values of differences between any two elements in the difference set form a second sequence, and values in the second sequence are all positive integers greater than or equal to 1 and less than N. In addition, in all the positive integers greater than or equal to 1 and less than N in the second sequence, each positive integer occurs a same quantity of times in the second sequence. uₖ ∈ {0,1,2 ... *, N -* 1}, k = *1,2, ... , K,* and a k^{th} element uₖ in the difference set corresponds to a (uₖ + 1)^{th} element in Z_{N}.

If represented by a formula, a value in the second sequence may be represented as (uₖ - u*ₗ* )mod N, k ≠ *l.* Herein, k, *l* = *1,2, ... , K.* For example, *N =* 7, *K =* 3, and u = {1,2,4}.

When the sequence set is constructed, *Z_{N}* may be used as a row index of an N-order DFT matrix (referred to as a second matrix), and K elements in the difference set *u* may represent indexes of *K* rows of elements in the second matrix. Therefore, the K rows of elements may be extracted from the second matrix based on the difference set u, the *K* rows of elements may form a matrix of *K* × *N,* and the matrix of *K* × *N* is used as a first matrix. Each column of the first matrix may be used as an ETF sequence, in other words, the first matrix may be considered as a matrix including *N* ETF sequences, and a length of each sequence is *K.* In other words, the *N* sequences may be sequences in the sequence set.

It may be understood that a manner of determining the N-order DFT matrix (namely, the second matrix) is not limited in this application. For example, the network device may generate the N-order DFT matrix, or the second matrix may be configured by using a communication protocol or configuration information of a communication apparatus. This is not specifically limited.

The following describes a manner of determining a difference set by using Manner 1 and Manner 2.

Manner 1: A prime number p and an integer d ≥ 2 are taken, and a generator α of a multiplication group of a finite field 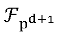 is selected, to determine a difference set. A trace of any element ω in 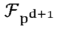 relative to a base field 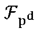 satisfies: $trace \left(ω\right) = {\sum }_{i = 0}^{d} {ω}^{{q}^{i}}$.

When *N* satisfies $N = \frac{{p}^{d + 1} - 1}{p - 1}$, and *K* satisfies $K = \frac{{p}^{d} - 1}{p - 1}$, u = {t + 1: 0 ≤ t < *N,* trace(α^{t}) = 0} is a difference set including K elements in *Z_{N}* = {1,2, *..., N}.* Therefore, *K* rows of elements whose row number is *u* may be extracted from the N-order second matrix, to obtain the first matrix of *K* × *N.* The matrix of *K* × *N* forms an ETF codebook, the codebook includes *N* spreading codes, and a length of each spreading code is *K.* The spreading code is a sequence.

It may be understood that there may be a plurality of value selections for ω, and different value selections may correspond to different difference sets. The difference set shown in this application is an example of some possible difference sets.

In other words, indexes of the K rows of elements form a first set, and the first set satisfies: $\left\{t+1:0\leq t<N,trace\left({α}^{t}\right)=0\right\} ,$ where
$trace \left(ω\right) = {\sum }_{i = 0}^{d} {ω}^{{q}^{i}}$, that is, $trace \left({α}^{t}\right) = {\sum }_{i = 0}^{d} {α}^{{tq}^{i}}$*,* represents a trace of any element ω in a finite field 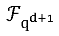 relative to a base field 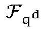 , α represents a generator of a multiplication group of the finite field 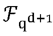 , d is a positive integer greater than or equal to 2, q = p^{r}, and t and r are integers.

Optionally, if d = 2 is selected, and *N* = p² + p + 1 and *K* = p + 1 may be obtained in Manner 1. Therefore, $OF = \frac{N}{K} = p + \frac{1}{p + 1}$, and OF represents an overload factor. Therefore, with the increase of p, OF may reach a theoretical limit of the ETF. Therefore, when d = 2, a sequence constructed in Manner 1 is applicable to a scenario with a relatively large OF requirement.

Manner 2: A power of a prime number q = p^{r} = 3 mod 4 is taken, and a set $u = \left\{{t}^{2}:t∈{Z}_{N}^{∗}\right\}$ is a difference set including $K = \frac{q - 1}{2}$ elements in *Z_{N}* = {1,2, ..., *N} ,* and t and r are integers. ≡ represents congruential, and q = p^{r} ≡ 3 mod 4 represents that q - 3 is divisible by 4. Therefore, K rows of elements whose row number is *u* may be extracted from the N-order second matrix, to obtain the first matrix of *K* × *N.* The matrix of *K* × *N* forms an ETF codebook, the codebook includes *N* spreading codes, and a length of each spreading code is *K.* The spreading code is a sequence. OF of a sequence set constructed in Manner 2 is around 2.

For example, Table 1 provides an example of difference sets obtained based on different values of *N* and *K* in Manner 1 or Manner 2.

**Table 1**

| *K* | *N* | OF | Difference set |
|---|---|---|---|
| 2 | 3 | 1.5 | 1,2 |
| 3 | 7 | 2.3 | 1,2,4 |
| 4 | 13 | 3.3 | 0,1,3,9 |
| 5 | 11 | 2.2 | 1,3,4,5,9 |
| 7 | 15 | 2.1 | 0,1,2,4,5,8,10 |
| 9 | 19 | 2.1 | 1,4,5,6,7,9,11,16,17 |
| 11 | 23 | 2.1 | 1,2,3,4,6,8,9,12,13,16,18 |
| 13 | 40 | 3.1 | 0,1,3,5,9,15,22,25,26,27,34,35,38 |
| 5 | 21 | 4.2 | 3,6,7,12,14 |
| 6 | 31 | 5.2 | 1,5,11,24,25,27 |
| 9 | 37 | 4.1 | 1,7,9,10,12,16,26,33,34 |
| 8 | 57 | 7.1 | 1,6,7,9,19,38,42,49 |
| 9 | 73 | 8.1 | 17,33,34,45,53,59,63,66,68 |
| 10 | 91 | 9.1 | 0,8,11,24,28,33,34,70,72,84 |
| 12 | 133 | 11.1 | 1,10,11,13,27,31,68,75,83,110,115,121 |

The difference sets shown in Table 1 is an example of some possible difference sets, and this application is not limited to the difference sets shown in Table 1. For example, a set obtained after cyclic shift is performed on elements in a difference set corresponding to specific values of *N and K* is still a difference set.

As described above, elements in the difference set are indexes, in the second matrix, of K rows of elements extracted from the N-order DFT matrix (namely, the second matrix). Therefore, when the sequence set is determined, the first matrix formed by the K rows of elements whose indexes belong to the difference sets may be extracted from the second matrix based on the difference sets shown in Table 1. The first matrix is a matrix formed by sequences in the sequence set. A k^{th} element uₖ in the difference set corresponds to a (uₖ + 1)^{th} element in Z_{N}. Therefore, a (uₖ + 1)^{th} row of elements in the second matrix may be extracted based on the difference set, to form the first matrix, where k = 1, 2, ... , *K.* For example, when *N =* 7, and *K =* 3, the difference set is {1,2,4}. Therefore, elements in a second row, a third row, and a fifth row may be extracted from a 7-order DFT matrix to form the first matrix, in other words, indexes of the *K* rows of elements in the second matrix are 2, 3, and 5, respectively.

For example, Table 2-1 to Table 2-4 are examples of sequence sets. The first sequence may be any sequence in the first matrix shown in the tables. When *K* = 2, and *N* = 3, the sequence set includes sequences shown in Table 2-1.

**Table 2-1**

| Sequence 1 | Sequence 2 | Sequence 3 |
|---|---|---|
| 0.5774+0i | 0.5774+0i | 0.5774+0i |
| 0.5774+0i | -0.2887+0.5000i | -0.2887-0.5000i |

When *K* = 3, and *N* = 7, the sequence set includes sequences shown in Table 2-2. In a sequence shown in this application, i represents an imaginary unit, in other words, the sequence may include one or more complex number elements.

**Table 2-2**

| Sequence 1 | Sequence 2 | Sequence 3 | Sequence 4 | Sequence | Sequence 6 | Sequence 7 |
|---|---|---|---|---|---|---|
| 0.3780+0i | 0.2357+ 0.2955i | -0.0841+ 0.3685i | -0.3405+ 0.1640i | -0.3405-0.1640i | -0.0841-0.3685i | 0.2357-0.2955i |
| 0.3780+0i | -0.0841+ 0.3685i | -0.3405-0.1640i | 0.2357-0.2955i | 0.2357+ 0.2955i | -0.3405+ 0.1640i | -0.0841-0.3685i |
| 0.3780+0i | -0.3405-0.1640i | 0.2357+ 0.2955i | -0.0841-0.3685i | -0.0841+ 0.3685i | 0.2357-0.2955i | -0.3405+ 0.1640i |

When K = 4, and *N* = 13, the sequence set includes sequences shown in Table 2-3.

**Table 2-3**

| Sequence 1 | Sequence 2 | Sequence 3 | Sequence 4 | Sequence 5 | Sequence 6 | |
|---|---|---|---|---|---|---|
| 0.2774+0i | 0.2774+0i | 0.2774+0i | 0.2774+0i | 0.2774+0i | 0.2774+0i | |
| 0.2774+0i | 0.2456+0.128 9i | 0.1576+0.228 3i | 0.0334+0.275 3i | - 0.0983+0.259 3i | -0.2076+0.1839i | |
| 0.2774+0i | 0.0334+0.275 3i | - 0.2693+0.066 4i | -0.0983-0.2593i | 0.2456-0.1289i | 0.1576+0.2283i | |
| 0.2774+0i | -0.0983-0.2593i | - 0.2076+0.183 9i | 0.2456+0.128 9i | 0.0334-0.2753i | -0.2693+0.0664i | |

| Sequence 7 | Sequence 8 | Sequence 9 | Sequence 10 | Sequence 11 | Sequence 12 | Sequence 13 |
|---|---|---|---|---|---|---|
| 0.2774+0i | 0.2774+0i | 0.2774+0i | 0.2774+0i | 0.2774+0i | 0.2774+0i | 0.2774+0i |
| - 0.2693+0.066 4i | -0.2693-0.0664i | -0.2076-0.1839i | -0.0983-0.2593i | 0.0334-0.2753i | 0.1576-0.2283i | 0.2456-0.1289i |
| - 0.2076+0.183 9i | -0.2076-0.1839i | 0.1576-0.2283i | 0.2456+0.128 9i | - 0.0983+0.259 3i | -0.2693-0.0664i | 0.0334-0.2753i |
| 0.1576+0.228 3i | 0.1576-0.2283i | -0.2693-0.0664i | 0.0334+0.275 3i | 0.2456-0.1289i | -0.2076-0.1839i | - 0.0983+0.2 593i |

When K = 6, and *N* = 31, the sequence set includes sequences shown in Table 2-4.

**Table 2-4**

| Sequence 1 | Sequence 2 | Sequence 3 | Sequence 4 | Sequence 5 | Sequence 6 | |
|---|---|---|---|---|---|---|
| 0.1796+0i | 0.1759+0.036 2i | 0.1650+0.070 8i | 0.1474+0.102 6i | 0.1237+0.130 2i | 0.0950+0.1524i | |
| 0.1796+0i | 0.0950+0.152 4i | - 0.0791+0.161 3i | - 0.1787+0.018 2i | -0.1099-0.1420i | 0.0624-0.1684i | |
| 0.1796+0i | - 0.1099+0.142 0i | -0.0450-0.1739i | 0.1650+0.070 8i | - 0.1570+0.087 2i | 0.0272-0.1775i | |
| 0.1796+0i | 0.0272-0.1775i | -0.1714-0.0538i | - 0.0791+0.161 3i | 0.1474+0.102 6i | 0.1237-0.1302i | |
| 0.1796+0i | 0.0624-0.1684i | -0.1363-0.1170i | - 0.1570+0.087 2i | 0.0272+0.177 5i | 0.1759+0.0362i | |
| 0.1796+0i | 0.1237-0.1302i | -0.0091-0.1794i | -0.1363-0.1170i | - 0.1787+0.018 2i | -0.1099+0.1420i | |

| Sequence 7 | Sequence 8 | Sequence 9 | Sequence 10 | Sequence 11 | Sequence 12 | |
|---|---|---|---|---|---|---|
| 0.0624+0.168 4i | 0.0272+0.177 5i | - 0.0091+0.179 4i | - 0.0450+0.173 9i | - 0.0791+0.161 3i | -0.1099+0.1420i | |
| 0.1759-0.0362i | 0.1237+0.130 2i | - 0.0450+0.173 9i | - 0.1714+0.053 8i | -0.1363-0.1170i | 0.0272-0.1775i | |
| 0.1237+0.130 2i | - 0.1787+0.018 | 0.0950-0.1524i | 0.0624+0.168 4i | -0.1714-0.0538i | 0.1474-0.1026i | |
| | 2i | | | | | |
| -0.1099-0.1420i | - 0.1570+0.087 2i | 0.0624+0.168 4i | 0.1759-0.0362i | -0.0091-0.1794i | -0.1787-0.0182i | |
| 0.0950-0.1524i | -0.1099-0.1420i | - 0.1714+0.053 8i | - 0.0091+0.179 4i | 0.1650+0.070 8i | 0.1237-0.1302i | |
| 0.0272+0.177 5i | 0.1474+0.102 6i | 0.1759-0.0362i | 0.0950-0.1524i | -0.0450-0.1739i | -0.1570-0.0872i | |

| Sequence 13 | Sequence 14 | Sequence 15 | Sequence 16 | Sequence 17 | Sequence 18 | |
|---|---|---|---|---|---|---|
| -0.1363+ 0.117i | - 0.1570+0.087 2i | - 0.1714+0.053 8i | - 0.1787+0.018 2i | -0.1787-0.0182i | -0.1714-0.0538i | |
| 0.1650-0.0708i | 0.1474+0.102 6i | - 0.0091+0.179 4i | - 0.1570+0.087 2i | -0.1570-0.0872i | -0.0091-0.1794i | |
| - 0.0091+0.179 4i | -0.1363-0.1170i | 0.1759-0.0362i | - 0.0791+0.161 3i | -0.0791-0.1613i | 0.1759+0.0362i | |
| - 0.0450+0.173 9i | 0.1650+0.070 8i | 0.0950-0.1524i | -0.1363-0.1170i | - 0.1363+0.117 0i | 0.0950+0.1524i | |
| -0.0791-0.1613i | - 0.1787+0.018 2i | - 0.0450+0.173 9i | 0.1474+0.102 6i | 0.1474-0.1026i | -0.0450-0.1739i | |
| - 0.1714+0.053 8i | - 0.0791+0.161 3i | 0.0624+0.168 4i | 0.1650+0.070 8i | 0.1650-0.0708i | 0.0624-0.1684i | |

| Sequence 19 | Sequence 20 | Sequence 21 | Sequence 22 | Sequence 23 | Sequence 24 | |
|---|---|---|---|---|---|---|
| -0.157-0.0872i | -0.1363-0.1170i | -0.1099-0.1420i | -0.0791-0.1613i | -0.0450-0.1739i | -0.0091-0.1794i | |
| 0.1474-0.1026i | 0.1650+0.070 8i | 0.0272+0.177 5i | - 0.1363+0.117 0i | -0.1714-0.0538i | -0.0450-0.1739i | |
| - 0.1363+0.117 0i | -0.0091-0.1794i | 0.1474+0.102 6i | - 0.1714+0.053 8i | 0.0624-0.1684i | 0.0950+0.1524i | |
| 0.1650-0.0708i | -0.0450-0.1739i | - 0.1787+0.018 2i | - 0.0091+0.179 4i | 0.1759+0.036 2i | 0.0624-0.1684i | |
| -0.1787- | - | 0.1237+0.130 | 0.1650- | -0.0091- | -0.1714-0.0538i | |
| 0.0182i | 0.0791+0.161 3i | 2i | 0.0708i | 0.1794i | | |
| -0.0791-0.1613i | -0.1714-0.0538i | - 0.1570+0.087 2i | - 0.0450+0.173 9i | 0.0950+0.152 4i | 0.1759+0.0362i | |

| Sequence 25 | Sequence 26 | Sequence 27 | Sequence 28 | Sequence 29 | Sequence 30 | Sequence 31 |
|---|---|---|---|---|---|---|
| 0.0272-0.1775i | 0.0624-0.1684i | 0.0950-0.1524i | 0.1237-0.1302i | 0.1474-0.1026i | 0.1650-0.0708i | 0.1759-0.0362i |
| 0.1237-0.1302i | 0.1759+0.036 2i | 0.0624+0.168 4i | - 0.1099+0.142 0i | -0.1787-0.0182i | -0.0791-0.1613i | 0.0950-0.1524i |
| -0.1787-0.0182i | 0.1237-0.1302i | 0.0272+0.177 5i | -0.1570-0.0872i | 0.1650-0.0708i | - 0.0450+0.17 39i | -0.1099-0.1420i |
| -0.1570-0.0872i | - 0.1099+0.142 0i | 0.1237+0.130 2i | 0.1474-0.1026i | -0.0791-0.1613i | - 0.1714+0.05 38i | 0.0272+0.177 5i |
| - 0.1099+0.142 0i | 0.0950+0.152 4i | 0.1759-0.0362i | 0.0272-0.1775i | -0.1570-0.0872i | - 0.1363+0.11 70i | 0.0624+0.168 4i |
| 0.1474-0.1026i | 0.0272-0.1775i | -0.1099-0.1420i | -0.1787-0.0182i | - 0.1363+0.117 0i | - 0.0091+0.17 94i | 0.1237+0.130 2i |

The sequences and the sequence sets shown in Table 2-1 to Table 2-4 are merely examples of some possible implementations, and the sequences and the sequence sets protected in this application are not limited thereto.

Optionally, the sequence sets shown in Table 2-1 to Table 2-4 may be obtained by extracting *K* rows of elements from the second matrix based on the difference sets. For example, when K = 2, and *N* = 3, elements in a second row and a third row in Table 2-1 may be used as the first matrix. In this case, the first matrix may be represented as:

| | | |
|---|---|---|
| 0.5774+0i | 0.5774+0i | 0.5774+0i |
| 0.5774+0i | -0.2887+0.5000i | -0.2887-0.5000i |

.

It may be understood that Table 2-1 to Table 2-4 are examples of representation forms of correspondences between K, *N*, and sequence sets. The network device may determine the sequence set and/or the first sequence through table lookup based on values of *K* and *N*, to accurately and efficiently determine the first sequence. That the correspondences between *K*, *N*, and the sequence sets are represented or stored in another form other than the foregoing table is not limited in this application.

Optionally, matrices shown in Table 2-1 to Table 2-4 may be formed by extracting the *K* rows of elements from the *N*-order DFT matrix (namely, the second matrix) based on the difference sets. For example, the *N*-order DFT matrix may satisfy: ${a}_{mn} = exp \left(2πj⋅\frac{\left(m-1\right) \left(n-1\right)}{N}\right) .$

Herein, aₘₙ represents an element value in an *m^{th}* row and an *n^{th}* column in the *N*-order DFT matrix.

In a possible embodiment, the first sequence may be one column of elements in the first matrix. Alternatively, the first sequence corresponds to one column of elements in the first matrix. For example, the first sequence may be obtained based on the column of elements in the first matrix.

Optionally, in a process of obtaining a sequence based on one column of elements in the first matrix, sequence normalization may be performed on any column of elements in the first matrix, to be specific, through amplification or reduction, a length of a vector formed by the column of elements is 1, or a modulus length of the column of elements is 1, and a processed sequence may be used as the first sequence. For example, in a sequence normalization process, a sequence normalization coefficient may be multiplied by each element in any column in the first matrix, and an element obtained after the sequence normalization may be used as the first sequence. The sequence normalization coefficient may satisfy $\sqrt{N / K}$.

A sequence 1 in Table 2-1 is used as an example. When *K* = 2, and *N* = 3, a sequence normalization coefficient is $\sqrt{3 / 2}$, and a first sequence obtained based on the sequence 1 is, for example, represented as $\left[\left(0.5774+0i\right)⋅\sqrt{\frac{3}{2}},\left(0.5774+0i\right)⋅\sqrt{\frac{3}{2}}\right] .$

It may be understood that, in some cases, sequence normalization does not need to be performed. For example, the first matrix satisfies that a length of a vector formed by one column of elements in the matrix is 1.

In this embodiment, the sequence set may be used as a sequence codebook in which the first sequence is located.

In another possible embodiment, the first sequence may be a sequence determined based on the sequence set in S101. For example, the sequence set may be used to determine a third matrix, and the first sequence may be one column of elements in the third matrix. The third matrix may be a matrix obtained by performing a tensor product operation between the first matrix and a fourth matrix. The fourth matrix is a matrix that satisfies a Welch (Welch) bound condition, or the fourth matrix is a WBE matrix. Based on the tensor product operation, a length of a column vector of the third matrix, to be specific, a length of a sequence included in the third matrix, is a plurality of times a length of a column vector of the first matrix. Therefore, a sequence with an extended length may be obtained based on an ETF sequence, to meet requirements of transmission scenarios of different transmission rates for sequence lengths.

Any column of elements in the WBE matrix may be used as one sequence, and a plurality of columns of elements in the WBE matrix may form a WBE sequence group. The WBE sequence group may also be referred to as a WBE sequence set. The WBE sequence group may be considered as a sequence group with a minimum interference sum of users in the sequence group.

For example, for any *N* sequences {x₁, x₂, ... , x_{N}} whose length is 1 in a *K*-dimensional complex space, if the following equation is met, the sequence group may be referred to as a WBE sequence group: ${\sum }_{i , j = 1}^{N} {\left|{x}_{i}⋅{x}_{j}^{∗}\right|}^{2} = \frac{{N}^{2}}{K} .$

As an example of a manner of obtaining the third matrix, the third matrix may be represented as $M ⊗ U$ . Herein, 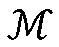 represents the first matrix, and 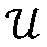 represents the fourth matrix. ⊗ represents the tensor product operation.

For example, if $U = \left(\begin{matrix}{a}_{11} & ⋯ & {a}_{1 n} \\ ⋮ & ⋱ & ⋮ \\ {a}_{n 1} & ⋯ & {a}_{nn}\end{matrix}\right)$, where [a₁₁, ... , aₙ₁] to [a₁ₙ, ... , *aₙₙ*] each are one sequence in the WBE sequence group, the third matrix may satisfy:$M ⊗ U = \left(\begin{matrix}{a}_{11} ⋅ M & ⋯ & {a}_{1 n} ⋅ M \\ ⋮ & ⋱ & ⋮ \\ {a}_{n 1} ⋅ M & ⋯ & {a}_{nn} ⋅ M\end{matrix}\right)$. It may be learned that a length of a column vector of the third matrix is n times the length of the column vector of the first matrix.

In an example, the orthogonal matrix may be a WBE matrix, to be specific, the fourth matrix may be an orthogonal matrix. For example, the fourth matrix is $U = \left(\begin{matrix}1 & 1 \\ 1 & - 1\end{matrix}\right)$. Therefore, the third matrix may be represented as $\left(\begin{matrix}M & M \\ M & - M\end{matrix}\right)$, where 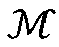 represents the first matrix. In this case, each column of the third matrix may be used as one sequence, for example, used as the first sequence, and the length of the first sequence is twice a length of an ETF sequence in the first matrix. A longer sequence may be applicable to a low-speed transmission scenario. A set of sequences formed by all columns in the third matrix may be referred to as a second sequence set, in other words, the first sequence may be one sequence in the second sequence set. In this case, the second sequence set may be used as a sequence codebook in which the first sequence is located.

Optionally, sequence normalization may alternatively be performed on any column of elements in the third matrix, to be specific, through amplification or reduction, a length of a vector formed by the column of elements is 1, or a modulus length of the column of elements is 1, and a processed sequence is used as the first sequence. For example, in a sequence normalization process, a sequence normalization coefficient may be multiplied by each element in any column in the third matrix, and an element obtained after the sequence normalization may be used as the first sequence. For example, the sequence normalization coefficient is, for example, $\sqrt{1 / n}$, and n is a quantity of rows of the third matrix.

It may be understood that, in some cases, sequence normalization does not need to be performed. For example, the third matrix satisfies that a length of a vector formed by one column of elements in the matrix is 1.

In an example, a sequence in the first matrix 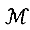 and a sequence in the third matrix $\left(\begin{matrix}M & M \\ M & - M\end{matrix}\right)$ may be used to perform data transmission at different rates. For example, a terminal device 1 and a terminal device 2 respectively perform data transmission at different rates. The terminal device 1 and the terminal device 2 may indicate, to the network device, transmission rates or quantities required by the terminal device 1 and the terminal device 2, respectively. For example, a transmission rate required by the terminal device 1 is greater than a transmission quantity required by the terminal device 2. Correspondingly, the network device may indicate a sequence in the first matrix to the terminal device 1, so that the terminal device 1 performs data transmission by using the sequence in the first matrix. The network device may further indicate a sequence in the third matrix to the terminal device 2, so that the terminal device 2 performs data transmission by using the sequence in the third matrix.

Specifically, in a scenario, a terminal device A and a terminal device B need to transmit uplink data to the network device. 12 time-frequency resources are allocated to each of the terminal device A and the terminal device B. The terminal device A needs to transmit two pieces of information i_{A1} and i_{A2} on the 12 time-frequency resources, and the terminal device B needs to transmit one piece of information i_{B} on the 12 resources. In other words, a transmission rate required by the terminal device A is greater than a transmission rate required by the terminal device B.

As shown in Table 4, the network device may configure, for the terminal device A, a sequence whose length is 6, and configure, for the terminal device B, a sequence whose length is 12. The sequence whose length is 6 may be a sequence in the first matrix *M,* and the sequence whose length is 12 may be a sequence in the third matrix $\left(\begin{matrix}M & M \\ M & - M\end{matrix}\right)$ that is obtained based on the first matrix.

| | | | | | |
|---|---|---|---|---|---|
| i_{A1} · S_{A}(1) + i_{B} · S_{B}(1) | i_{A1} · S_{A}(2) + i_{B} · S_{B}(2) | i_{A1} · S_{A}(3) + i_{B} · S_{B}(3) | i_{A1} · S_{A}(4) + i_{B} · S_{B}(4) | i_{A1} · S_{A}(5) + i_{B} · S_{B}(5) | i_{A1} · S_{A}(6) + i_{B} · S_{B}(6) |
| i_{A2} · S_{A}(1) + i_{B} · S_{B}(7) | i_{A2} · S_{A}(2) + i_{B} · S_{B}(8) | i_{A2} · S_{A}(3) + i_{B} · S_{B}(9) | i_{A2} · S_{A}(4) + i_{B} · S_{B}(10) | i_{A2} · S_{A}(5) + i_{B} · S_{B}(11) | i_{A2} · S_{A}(6) + i_{B} · S_{B}(12) |

It may be understood that i_{A} and i_{B} in Table 4 respectively represent information about the terminal device A and information about the terminal device B. In addition, as described in this specification, i_{A1} and i_{A2} are respectively two pieces of information about the terminal device A. S_{A}(k) represents a sequence whose length is 6 and that is allocated by the network device to the terminal device A, where *k =* 1, 2, ... , 6. *S_{B}(l)* represents a sequence whose length is 12 and that is allocated by the network device to the terminal device B, where *l* = 1,2, ..., 12.

In an example of the indication information of the first sequence, the indication information of the first sequence may be an index of the first sequence in a sequence codebook. The sequence codebook is, for example, a sequence set corresponding to the first matrix or the second sequence set corresponding to the third matrix.

Optionally, the first communication apparatus and/or the second communication apparatus may further obtain indication information of a sequence set. The indication information of the sequence set may indicate the sequence set.

For example, the indication information of the sequence set may be an index of the sequence set. For example, the network device may indicate one or more sequence sets and indexes of the sequence sets to the terminal device. The network device may further indicate one of the sequence sets by using the indexes of the sequence sets, and further indicate the first sequence from the sequence set by using the indication information of the first sequence.

For another example, the indication information of the sequence set may include a quantity N of sequences in the sequence set and a length *K* of a sequence in the sequence set. For example, the network device may indicate, to the terminal device, one or more sequence sets and sequence sets corresponding to *N and K.* The network device may further indicate one of the sequence sets by using *N and K,* and further indicate the first sequence from the sequence set by using the indication information of the first sequence.

In another example of the indication information of the first sequence, first information may carry the first sequence. For example, the sequence 1 in Table 2-1 is used as an example. When *K =* 2, and *N =* 3, an information element in the first information carries $\left[\left(0.5774+0i\right)⋅\sqrt{\frac{3}{2}},\left(0.5774+0i\right)⋅\sqrt{\frac{3}{2}}\right]$, to indicate the first sequence.

It may be understood that, to implement functions in the foregoing embodiments, the communication apparatus provided in this application may include a corresponding hardware structure and/or software module for performing each function of the first communication apparatus and/or the second communication apparatus. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

### Network device

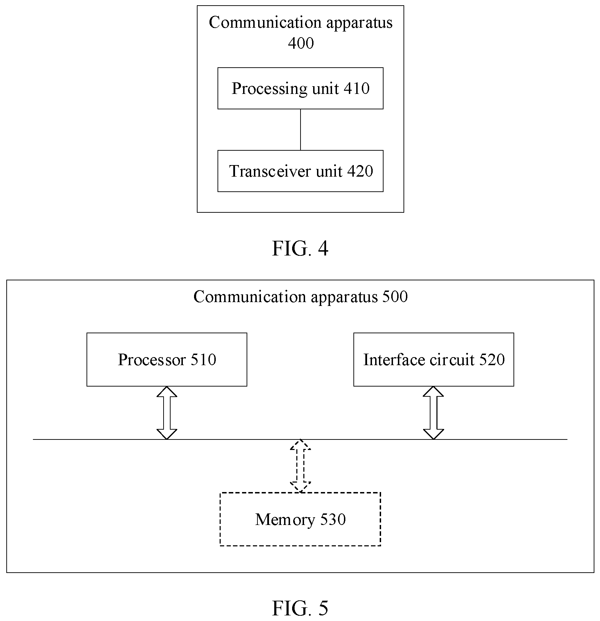

FIG. 4 and FIG. 5 are diagrams of structures of possible communication apparatuses according to embodiments of this application. These communication apparatuses may be configured to implement the functions of the first communication apparatus and/or the second communication apparatus in the foregoing method embodiments, and therefore can further implement the beneficial effects of the foregoing method embodiments. The first communication apparatus and/or the second communication apparatus may be separately used as a terminal or a network device. In embodiments of this application, the communication apparatus may be the terminal or the network device shown in FIG. 1, or may be a module (for example, a chip) applied to the terminal or the network device.

As shown in FIG. 4, a communication apparatus 400 includes a processing unit 410 and a transceiver unit 420. The communication apparatus 400 is configured to implement a function of the transmit end or the receive end in the method embodiment shown in FIG. 3.

When the communication apparatus 400 is configured to implement the function of the first communication apparatus or the second communication apparatus in the method embodiment shown in FIG. 3, the processing unit 410 or the transceiver unit 420 may be configured to obtain indication information of a first sequence. The transceiver unit 620 may be used for a first signal.

In addition, the processing unit 410 or the transceiver unit 420 may be configured to obtain indication information of a sequence set.

For more detailed descriptions of actions related to the processing unit 410 and the transceiver unit 420, refer to related descriptions in the method embodiment shown in FIG. 3.

As shown in FIG. 5, a communication apparatus 500 includes a processor 510 and an interface circuit 520. The processor 510 and the interface circuit 520 are coupled to each other. It may be understood that the interface circuit 520 may be a transceiver or an input/output interface. Optionally, the communication apparatus 500 may further include a memory 530 configured to store instructions to be executed by the processor 510, store input data required for the processor 510 to run the instructions, or store data generated after the processor 510 runs the instructions.

When the communication apparatus 500 is configured to implement the method shown in FIG. 3, the processor 510 is configured to implement functions of the processing unit 410, and the interface circuit 520 is configured to implement functions of the transceiver unit 420.

When the communication apparatus is a module or a chip applied to the first communication apparatus or the second communication apparatus, the module or the chip implements a function of the first communication apparatus or the second communication apparatus in the foregoing method embodiment. The module or the chip receives information by using another module (for example, a radio frequency module or an antenna), and the information may be transmitted to the module or the chip after being received by the another module by using an air interface; or the module or the chip sends information to the another module (for example, the radio frequency module or the antenna), so that the another module sends the information by using the air interface.

When the communication apparatus is a module or a chip applied to an access network device (for example, a base station), the communication apparatus implements the function of the first communication apparatus or the second communication apparatus in the foregoing method embodiment. The module or the chip may be configured to receive information from another module (for example, a radio frequency module or an antenna), and the information is received by the another module by using an air interface; or the module or the chip sends information to the another module (for example, the radio frequency module or the antenna), so that the another module sends the information by using the air interface. The module or the chip herein may be a baseband chip, or may be a CU, a DU, or another module, or may be an apparatus in an O-RAN architecture, for example, an apparatus such as an open CU or an open DU.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in the base station or the O-RAN. The processor and the storage medium may exist in the base station or the O-RAN as discrete components.

An embodiment of this application further provides a computer-readable storage medium. The computer-readable storage medium stores instructions, and the instructions may also be referred to as a computer program, computer program code, or the like. The instructions run on a computer, so that the computer performs the method shown in FIG. 3 in the foregoing method embodiment and embodiments of this application.

An embodiment of this application further provides a computer program product, including a computer program or instructions. When the computer program or the instructions run on a computer, the method shown in FIG. 3 and embodiments of this application is implemented.

An embodiment of this application further provides a chip. The chip includes a processor, the processor is coupled to a memory, and the processor is configured to execute a computer program or instructions stored in the memory, so that the method shown in FIG. 3 and embodiments of this application is implemented. For example, an example in which the chip implements a function of the access network device is used. The chip may receive information from another module (for example, a radio frequency or an antenna) in the access network device, and the information may be sent by a terminal to the access network device. Alternatively, the chip may send information to another module (for example, a radio frequency or an antenna) in the access network device. The information is sent by the access network device to a terminal.

An embodiment of this application further provides a communication system, including a first communication apparatus and a second communication apparatus. The first communication apparatus and the second communication apparatus may be respectively configured to implement functions of the first communication apparatus and the second communication apparatus in this application.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. The term "and/or" describes an association relationship between associated objects, and indicates that three relationships may exist. For example, A and/or B may represent the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A sequence indication method, comprising:
obtaining indication information of a first sequence, wherein a sequence set corresponding to the first sequence satisfies:
a maximum value of a square of an inner product of any two sequences in the sequence set is equal to a first value, and the first value is associated with *N* and *K*, wherein *N* represents a quantity of sequences in the sequence set, and *K* represents a length of a sequence in the sequence set; and
transmitting a first signal, wherein the first signal corresponds to the first sequence.

2. The method according to claim 1, wherein any sequence in the sequence set corresponds to one column of elements in a first matrix, wherein
the first matrix is formed by *K* rows of elements in a second matrix, the second matrix is an *N*-order discrete Fourier transform DFT matrix, both *K* and N are positive integers, *N* is greater than 1, and K is less than or equal to *N*; and
the K rows of elements satisfy the following condition: modulo *N* values of differences between any two of indexes in the second matrix form a second sequence, and values in the second sequence are positive integers greater than or equal to 1 and less than N; and in the positive integers greater than or equal to 1 and less than *N*, each positive integer occurs a same quantity of times in the second sequence.

3. The method according to claim 2, wherein the first sequence is one column of elements in the first matrix; or
the first sequence is one column of elements in a third matrix, the third matrix is a matrix obtained by performing a tensor product operation between the first matrix and a fourth matrix, and the fourth matrix is a matrix that satisfies a Welch bound condition.

4. The method according to claim 1, wherein the first sequence is a sequence in the sequence set; or
any sequence in the sequence set corresponds to one column of elements in a first matrix, the first sequence is a sequence in a second sequence set, any sequence in the second sequence set is one column of elements in a third matrix, the third matrix is a matrix obtained by performing a tensor product operation between the first matrix and a fourth matrix, and the fourth matrix is a matrix that satisfies a Welch bound condition; and the first matrix is formed by *K* rows of elements in a second matrix, the second matrix is an *N*-order DFT matrix, and both K and N are positive integers, *N* is greater than 1, and K is less than or equal to *N*, wherein
the K rows of elements satisfy the following condition: modulo *N* values of differences between any two of indexes in the second matrix form a second sequence, and values in the second sequence are positive integers greater than or equal to 1 and less than N; and in the positive integers greater than or equal to 1 and less than *N*, each positive integer occurs a same quantity of times in the second sequence.

5. The method according to claim 3 or 4, wherein the fourth matrix is an orthogonal matrix.

6. The method according to any one of claims 1 to 5, wherein the first value is equal to $\frac{N - K}{K \left(N-1\right)}$.

7. The method according to any one of claims 1 to 6, wherein the first matrix is an equiangular tight frame ETF matrix.

8. The method according to claim 2 or 3, wherein when *K* = 2, and *N* = 3, indexes of the *K* rows of elements in the second matrix are 2 and 3; or
when K = 3, and *N* = 7, indexes of the *K* rows of elements in the second matrix are 2, 3, and 5, respectively; or
when *K* = 4, and *N* = 13, indexes of the *K* rows of elements in the second matrix are 1, 2, 4, and 10, respectively; or
when *K =* 5, and *N =* 11, indexes of the *K* rows of elements in the second matrix are 2, 4, 5, 6, and 10, respectively; or
when *K =* 7, and *N =* 15, indexes of the *K* rows of elements in the second matrix are 1, 2, 3, 5, 6, 9, and 11, respectively; or
when *K = 9,* and *N =* 19, indexes of the *K* rows of elements in the second matrix are 2, 5, 6, 7, 8, 10, 12, 17, and 18, respectively; or
when *K =* 11, and *N* = 23, indexes of the *K* rows of elements in the second matrix are 2, 3, 4, 5, 6, 9, 10, 13, 14, 17, and 19, respectively; or
when *K =* 13, and *N* = 40, indexes of the *K* rows of elements in the second matrix are 1, 2, 4, 6, 10, 16, 23, 26, 27, 28, 35, 36, and 39, respectively; or
when *K =* 5, and *N =* 21, indexes of the *K* rows of elements in the second matrix are 4, 7, 8, 13, and 15, respectively; or
when *K =* 6, and *N =* 31, indexes of the *K* rows of elements in the second matrix are 2, 6, 12, 25, 26, and 28, respectively; or
when *K =* 9, and *N =* 37, indexes of the *K* rows of elements in the second matrix are 2, 8, 10, 11, 13, 17, 27, 34, and 35, respectively; or
when *K =* 8, and *N =* 57, indexes of the *K* rows of elements in the second matrix are 2, 7, 8, 10, 20, 39, 43, and 50, respectively; or
when *K =* 9, and *N =* 73, indexes of the *K* rows of elements in the second matrix are 18, 34, 35, 46, 54, 60, 64, 67, and 69, respectively; or
when *K =* 10, and *N* = 91, indexes of the *K* rows of elements in the second matrix are 1, 9, 12, 25, 29, 34, 35, 71, 73, and 85, respectively; or
when *K =* 12, and *N* = 133, indexes of the *K* rows of elements in the second matrix are 2, 11, 12, 14, 28, 32, 69, 76, 84, 111, 116, and 122, respectively.

9. The method according to any one of claims 1 to 8, wherein when *K =* 2 and *N =* 3, the sequence set comprises the following sequences 1 to 3:
| Sequence 1 | Sequence 2 | Sequence 3 |
|---|---|---|
| 0.5774+0i | 0.5774+0i | 0.5774+0i |
| 0.5774+0i | -0.2887+0.5000i | -0.2887-0.5000i |
; when *K =* 3 and *N =* 7, the sequence set comprises the following sequences 1 to 7:
| Sequence 1 | Sequence 2 | Sequence 3 | Sequence 4 | Sequence | Sequence 6 | Sequence 7 |
|---|---|---|---|---|---|---|
| 0.3780+0i | 0.2357+ 0.2955i | -0.0841+ 0.3685i | -0.3405+ 0.1640i | -0.3405-0.1640i | -0.0841-0.3685i | 0.2357-0.2955i |
| 0.3780+0i | -0.0841+ 0.3685i | -0.3405-0.1640i | 0.2357-0.2955i | 0.2357+ 0.2955i | -0.3405+ 0.1640i | -0.0841-0.3685i |
| 0.3780+0i | -0.3405-0.1640i | 0.2357+ 0.2955i | -0.0841-0.3685i | -0.0841+ 0.3685i | 0.2357-0.2955i | -0.3405+ 0.1640i |
; when *K =* 4 and *N =* 13, the sequence set comprises the following sequences 1 to 13:
| Sequence 1 | Sequence 2 | Sequence 3 | Sequence 4 | Sequence 5 | Sequence 6 | |
|---|---|---|---|---|---|---|
| 0.2774+0i | 0.2774+0i | 0.2774+0i | 0.2774+0i | 0.2774+0i | 0.2774+0i | |
| 0.2774+0i | 0.2456+0.1289i | 0.1576+0.2283i | 0.0334+0.2753i | - 0.0983+0.2593i | -0.2076+0.1839i | |
| 0.2774+0i | 0.0334+0.2753i | -0.2693+0.0664i | -0.0983-0.2593i | 0.2456-0.1289i | 0.1576+0.2283i | |
| 0.2774+0i | -0.0983-0.2593i | -0.2076+0.1839i | 0.2456+0.1289i | 0.0334-0.2753i | -0.2693+0.0664i | |
| Sequence 7 | Sequence 8 | Sequence 9 | Sequence 10 | Sequence 11 | Sequence 12 | Sequence 13 |
|---|---|---|---|---|---|---|
| 0.2774+0i | 0.2774+0i | 0.2774+0i | 0.2774+0i | 0.2774+0i | 0.2774+0i | 0.2774+0i |
| - 0.2693+0.06 64i | -0.2693-0.0664i | -0.2076-0.1839i | -0.0983-0.2593i | 0.0334-0.2753i | 0.1576-0.2283i | 0.2456-0.1289i |
| - 0.2076+0.18 39i | -0.2076-0.1839i | 0.1576-0.2283i | 0.2456+0.1289i | - 0.0983+0.2593i | -0.2693-0.0664i | 0.0334-0.2753i |
| 0.1576+0.22 83i | 0.1576-0.2283i | -0.2693-0.0664i | 0.0334+0.2753i | 0.2456-0.1289i | -0.2076-0.1839i | - 0.0983+0.2 593i |
; and
when *K* = 6 and *N* = 31, the sequence set comprises the following sequences 1 to 31:
| Sequence 1 | Sequence 2 | Sequence 3 | Sequence 4 | Sequence 5 | Sequence 6 | |
|---|---|---|---|---|---|---|
| 0.1796+0i | 0.1759+0.036 2i | 0.1650+0.070 8i | 0.1474+0.102 6i | 0.1237+0.130 2i | 0.0950+0.1524i | |
| 0.1796+0i | 0.0950+0.152 4i | - 0.0791+0.161 3i | - 0.1787+0.018 2i | -0.1099-0.1420i | 0.0624-0.1684i | |
| 0.1796+0i | - 0.1099+0.142 0i | -0.0450-0.1739i | 0.1650+0.070 8i | - 0.1570+0.087 2i | 0.0272-0.1775i | |
| 0.1796+0i | 0.0272-0.1775i | -0.1714-0.0538i | - 0.0791+0.161 3i | 0.1474+0.102 6i | 0.1237-0.1302i | |
| 0.1796+0i | 0.0624-0.1684i | -0.1363-0.1170i | - 0.1570+0.087 2i | 0.0272+0.177 5i | 0.1759+0.0362i | |
| 0.1796+0i | 0.1237-0.1302i | -0.0091-0.1794i | -0.1363-0.1170i | - 0.1787+0.018 2i | -0.1099+0.1420i | |
| Sequence 7 | Sequence 8 | Sequence 9 | Sequence 10 | Sequence 11 | Sequence 12 | |
|---|---|---|---|---|---|---|
| 0.0624+0.168 4i | 0.0272+0.177 5i | - 0.0091+0.179 4i | - 0.0450+0.173 9i | - 0.0791+0.161 3i | -0.1099+0.1420i | |
| 0.1759-0.0362i | 0.1237+0.130 2i | - 0.0450+0.173 9i | - 0.1714+0.053 8i | -0.1363-0.1170i | 0.0272-0.1775i | |
| 0.1237+0.130 2i | - 0.1787+0.018 2i | 0.0950-0.1524i | 0.0624+0.168 4i | -0.1714-0.0538i | 0.1474-0.1026i | |
| -0.1099-0.1420i | - 0.1570+0.087 2i | 0.0624+0.168 4i | 0.1759-0.0362i | -0.0091-0.1794i | -0.1787-0.0182i | |
| 0.0950-0.1524i | -0.1099-0.1420i | - 0.1714+0.053 8i | - 0.0091+0.179 4i | 0.1650+0.070 8i | 0.1237-0.1302i | |
| 0.0272+0.177 5i | 0.1474+0.102 6i | 0.1759-0.0362i | 0.0950-0.1524i | -0.0450-0.1739i | -0.1570-0.0872i | |
| Sequence 13 | Sequence 14 | Sequence 15 | Sequence 16 | Sequence 17 | Sequence 18 | |
|---|---|---|---|---|---|---|
| -0.1363+ 0.117i | - 0.1570+0.087 2i | - 0.1714+0.053 8i | - 0.1787+0.018 2i | -0.1787-0.0182i | -0.1714-0.0538i | |
| 0.1650-0.0708i | 0.1474+0.102 6i | - 0.0091+0.179 4i | - 0.1570+0.087 2i | -0.1570-0.0872i | -0.0091-0.1794i | |
| - 0.0091+0.179 4i | -0.1363-0.1170i | 0.1759-0.0362i | - 0.0791+0.161 3i | -0.0791-0.1613i | 0.1759+0.0362i | |
| - 0.0450+0.173 9i | 0.1650+0.070 8i | 0.0950-0.1524i | -0.1363-0.1170i | - 0.1363+0.117 0i | 0.0950+0.1524i | |
| -0.0791-0.1613i | - 0.1787+0.018 2i | - 0.0450+0.173 9i | 0.1474+0.102 6i | 0.1474-0.1026i | -0.0450-0.1739i | |
| - 0.1714+0.053 8i | - 0.0791+0.161 3i | 0.0624+0.168 4i | 0.1650+0.070 8i | 0.1650-0.0708i | 0.0624-0.1684i | |
| Sequence 19 | Sequence 20 | Sequence 21 | Sequence 22 | Sequence 23 | Sequence 24 | |
|---|---|---|---|---|---|---|
| -0.157-0.0872i | -0.1363-0.1170i | -0.1099-0.1420i | -0.0791-0.1613i | -0.0450-0.1739i | -0.0091-0.1794i | |
| 0.1474-0.1026i | 0.1650+0.070 8i | 0.0272+0.177 5i | - 0.1363+0.117 | -0.1714-0.0538i | -0.0450-0.1739i | |
| | | | 0i | | | |
| - 0.1363+0.117 0i | -0.0091-0.1794i | 0.1474+0.102 6i | - 0.1714+0.053 8i | 0.0624-0.1684i | 0.0950+0.1524i | |
| 0.1650-0.0708i | -0.0450-0.1739i | - 0.1787+0.018 2i | - 0.0091+0.179 4i | 0.1759+0.036 2i | 0.0624-0.1684i | |
| -0.1787-0.0182i | - 0.0791+0.161 3i | 0.1237+0.130 2i | 0.1650-0.0708i | -0.0091-0.1794i | -0.1714-0.0538i | |
| -0.0791-0.1613i | -0.1714-0.0538i | - 0.1570+0.087 2i | - 0.0450+0.173 9i | 0.0950+0.152 4i | 0.1759+0.0362i | |
| Sequence 25 | Sequence 26 | Sequence 27 | Sequence 28 | Sequence 29 | Sequence 30 | Sequence 31 |
|---|---|---|---|---|---|---|
| 0.0272-0.1775i | 0.0624-0.1684i | 0.0950-0.1524i | 0.1237-0.1302i | 0.1474-0.1026i | 0.1650-0.0708i | 0.1759-0.0362i |
| 0.1237-0.1302i | 0.1759+0.036 2i | 0.0624+0.168 4i | - 0.1099+0.142 0i | -0.1787-0.0182i | -0.0791-0.1613i | 0.0950-0.1524i |
| -0.1787-0.0182i | 0.1237-0.1302i | 0.0272+0.177 5i | -0.1570-0.0872i | 0.1650-0.0708i | - 0.0450+0.17 39i | -0.1099-0.1420i |
| -0.1570-0.0872i | - 0.1099+0.142 0i | 0.1237+0.130 2i | 0.1474-0.1026i | -0.0791-0.1613i | - 0.1714+0.05 38i | 0.0272+0.177 5i |
| - 0.1099+0.142 0i | 0.0950+0.152 4i | 0.1759-0.0362i | 0.0272-0.1775i | -0.1570-0.0872i | - 0.1363+0.11 70i | 0.0624+0.168 4i |
| 0.1474-0.1026i | 0.0272-0.1775i | -0.1099-0.1420i | -0.1787-0.0182i | - 0.1363+0.117 0i | - 0.0091+0.17 94i | 0.1237+0.130 2i |
.

10. The method according to any one of claims 1 to 9, wherein the indication information of the first sequence comprises an index of the first sequence in the sequence set.

11. The method according to any one of claims 1 to 10, wherein the method further comprises:
obtaining the indication information of the sequence set.

12. The method according to claim 11, wherein the indication information of the sequence set comprises *N* and *K*.

13. A communication apparatus, comprising:
a processing module, configured to obtain indication information of a first sequence, wherein a sequence set corresponding to the first sequence satisfies:
a maximum value of a square of an inner product of any two sequences in the sequence set is equal to a first value, and the first value is associated with *N and K,* wherein *N* represents a quantity of sequences in the sequence set, and K represents a length of a sequence in the sequence set; and
a communication module, configured to transmit a first signal, wherein the first signal corresponds to the first sequence.

14. The apparatus according to claim 13, wherein any sequence in the sequence set corresponds to one column of elements in a first matrix, wherein
the first matrix is formed by K rows of elements in a second matrix, the second matrix is an N-order discrete Fourier transform DFT matrix, both *K* and N are positive integers, *N* is greater than 1, and *K* is less than or equal to *N;* and
the *K* rows of elements satisfy the following condition: modulo *N* values of differences between any two of indexes in the second matrix form a second sequence, and values in the second sequence are positive integers greater than or equal to 1 and less than *N;* and in the positive integers greater than or equal to 1 and less than *N,* each positive integer occurs a same quantity of times in the second sequence.

15. The apparatus according to claim 14, wherein the first sequence is one column of elements in the first matrix; or
the first sequence is one column of elements in a third matrix, the third matrix is a matrix obtained by performing a tensor product operation between the first matrix and a fourth matrix, and the fourth matrix is a matrix that satisfies a Welch bound condition.

16. The apparatus according to claim 13, wherein the first sequence is a sequence in the sequence set; or
any sequence in the sequence set corresponds to one column of elements in a first matrix, the first sequence is a sequence in a second sequence set, any sequence in the second sequence set is one column of elements in a third matrix, the third matrix is a matrix obtained by performing a tensor product operation between the first matrix and a fourth matrix, and the fourth matrix is a matrix that satisfies a Welch bound condition; and the first matrix is formed by *K* rows of elements in a second matrix, the second matrix is an N-order DFT matrix, and both *K* and N are positive integers, *N* is greater than 1, and *K* is less than or equal to *N,* wherein
the *K* rows of elements satisfy the following condition: modulo *N* values of differences between any two of indexes in the second matrix form a second sequence, and values in the second sequence are positive integers greater than or equal to 1 and less than *N;* and in the positive integers greater than or equal to 1 and less than *N,* each positive integer occurs a same quantity of times in the second sequence.

17. The apparatus according to claim 15 or 16, wherein the fourth matrix is an orthogonal matrix.

18. The apparatus according to any one of claims 13 to 17, wherein the first value is equal to $\frac{N - K}{K \left(N-1\right)}$.

19. The apparatus according to any one of claims 13 to 18, wherein the first matrix is an equiangular tight frame ETF matrix.

20. The apparatus according to claim 18 or 19, wherein when *K =* 2, and *N =* 3, indexes of the *K* rows of elements in the second matrix are 2 and 3; or
when *K =* 3, and *N* = 7, indexes of the *K* rows of elements in the second matrix are 2, 3, and 5, respectively; or
when *K =* 4, and *N* = 13, indexes of the *K* rows of elements in the second matrix are 1, 2, 4, and 10, respectively; or
when *K =* 5, and *N* = 11, indexes of the *K* rows of elements in the second matrix are 2, 4, 5, 6, and 10, respectively; or
when *K =* 7, and *N =* 15, indexes of the *K* rows of elements in the second matrix are 1, 2, 3, 5, 6, 9, and 11, respectively; or
when *K = 9,* and *N =* 19, indexes of the *K* rows of elements in the second matrix are 2, 5, 6, 7, 8, 10, 12, 17, and 18, respectively; or
when *K =* 11, and *N* = 23, indexes of the *K* rows of elements in the second matrix are 2, 3, 4, 5, 6, 9, 10, 13, 14, 17, and 19, respectively; or
when *K =* 13, and *N* = 40, indexes of the *K* rows of elements in the second matrix are 1, 2, 4, 6, 10, 16, 23, 26, 27, 28, 35, 36, and 39, respectively; or
when *K =* 5, and *N =* 21, indexes of the *K* rows of elements in the second matrix are 4, 7, 8, 13, and 15, respectively; or
when *K =* 6, and *N =* 31, indexes of the *K* rows of elements in the second matrix are 2, 6, 12, 25, 26, and 28, respectively; or
when *K =* 9, and *N =* 37, indexes of the *K* rows of elements in the second matrix are 2, 8, 10, 11, 13, 17, 27, 34, and 35, respectively; or
when *K =* 8, and *N* = 57, indexes of the *K* rows of elements in the second matrix are 2, 7, 8, 10, 20, 39, 43, and 50, respectively; or
when *K =* 9, and *N =* 73, indexes of the *K* rows of elements in the second matrix are 18, 34, 35, 46, 54, 60, 64, 67, and 69, respectively; or
when *K =* 10, and *N* = 91, indexes of the *K* rows of elements in the second matrix are 1, 9, 12, 25, 29, 34, 35, 71, 73, and 85, respectively; or
when *K =* 12, and *N* = 133, indexes of the *K* rows of elements in the second matrix are 2, 11, 12, 14, 28, 32, 69, 76, 84, 111, 116, and 122, respectively.

21. The apparatus according to any one of claims 13 to 20, wherein when *K =* 2 and *N =* 3, the sequence set comprises the following sequences 1 to 3:
| Sequence 1 | Sequence 2 | Sequence 3 |
|---|---|---|
| 0.5774+0i | 0.5774+0i | 0.5774+0i |
| 0.5774+0i | -0.2887+0.5000i | -0.2887-0.5000i |
; when *K =* 3 and *N =* 7, the sequence set comprises the following sequences 1 to 7:
| Sequence 1 | Sequence 2 | Sequence 3 | Sequence 4 | Sequence | Sequence 6 | Sequence 7 |
|---|---|---|---|---|---|---|
| 0.3780+0i | 0.2357+ 0.2955i | -0.0841+ 0.3685i | -0.3405+ 0.1640i | -0.3405-0.1640i | -0.0841-0.3685i | 0.2357-0.2955i |
| 0.3780+0i | -0.0841+ 0.3685i | -0.3405-0.1640i | 0.2357-0.2955i | 0.2357+ 0.2955i | -0.3405+ 0.1640i | -0.0841-0.3685i |
| 0.3780+0i | -0.3405-0.1640i | 0.2357+ 0.2955i | -0.0841-0.3685i | -0.0841+ 0.3685i | 0.2357-0.2955i | -0.3405+ 0.1640i |
; when *K =* 4 and *N =* 13, the sequence set comprises the following sequences 1 to 13:
| Sequence 1 | Sequence 2 | Sequence 3 | Sequence 4 | Sequence 5 | Sequence 6 | |
|---|---|---|---|---|---|---|
| 0.2774+0i | 0.2774+0i | 0.2774+0i | 0.2774+0i | 0.2774+0i | 0.2774+0i | |
| 0.2774+0i | 0.2456+0.1289 | 0.1576+0.2283i | 0.0334+0.2753i | - | -0.2076+0.1839i | |
| | i | | | 0.0983+0.2593i | | |
| 0.2774+0i | 0.0334+0.2753 i | -0.2693+0.0664i | -0.0983-0.2593i | 0.2456-0.1289i | 0.1576+0.2283i | |
| 0.2774+0i | -0.0983-0.2593i | -0.2076+0.1839i | 0.2456+0.1289i | 0.0334-0.2753i | -0.2693+0.0664i | |
| Sequence 7 | Sequence 8 | Sequence 9 | Sequence 10 | Sequence 11 | Sequence 12 | Sequence 13 |
|---|---|---|---|---|---|---|
| 0.2774+0i | 0.2774+0i | 0.2774+0i | 0.2774+0i | 0.2774+0i | 0.2774+0i | 0.2774+0i |
| - 0.2693+0.066 4i | -0.2693-0.0664i | -0.2076-0.1839i | -0.0983-0.2593i | 0.0334-0.2753i | 0.1576-0.2283i | 0.2456-0.1289i |
| - 0.2076+0.183 9i | -0.2076-0.1839i | 0.1576-0.2283i | 0.2456+0.1289i | - 0.0983+0.2593i | -0.2693-0.0664i | 0.0334-0.2753i |
| 0.1576+0.228 3i | 0.1576-0.2283i | -0.2693-0.0664i | 0.0334+0.2753i | 0.2456-0.1289i | -0.2076-0.1839i | - 0.0983+0.2 593i |
; and
when K = 6 and *N* = 31, the sequence set comprises the following sequences 1 to 31:
| Sequence 1 | Sequence 2 | Sequence 3 | Sequence 4 | Sequence 5 | Sequence 6 | |
|---|---|---|---|---|---|---|
| 0.1796+0i | 0.1759+0.036 2i | 0.1650+0.070 8i | 0.1474+0.102 6i | 0.1237+0.130 2i | 0.0950+0.1524i | |
| 0.1796+0i | 0.0950+0.152 4i | - 0.0791+0.161 3i | - 0.1787+0.018 2i | -0.1099-0.1420i | 0.0624-0.1684i | |
| 0.1796+0i | - 0.1099+0.142 0i | -0.0450-0.1739i | 0.1650+0.070 8i | - 0.1570+0.087 2i | 0.0272-0.1775i | |
| 0.1796+0i | 0.0272-0.1775i | -0.1714-0.0538i | - 0.0791+0.161 3i | 0.1474+0.102 6i | 0.1237-0.1302i | |
| 0.1796+0i | 0.0624-0.1684i | -0.1363-0.1170i | - 0.1570+0.087 2i | 0.0272+0.177 5i | 0.1759+0.0362i | |
| 0.1796+0i | 0.1237-0.1302i | -0.0091-0.1794i | -0.1363-0.1170i | - 0.1787+0.018 2i | -0.1099+0.1420i | |
| Sequence 7 | Sequence 8 | Sequence 9 | Sequence 10 | Sequence 11 | Sequence 12 | |
|---|---|---|---|---|---|---|
| 0.0624+0.168 4i | 0.0272+0.177 5i | - 0.0091+0.179 4i | - 0.0450+0.173 9i | - 0.0791+0.161 3i | -0.1099+0.1420i | |
| 0.1759-0.0362i | 0.1237+0.130 2i | - 0.0450+0.173 9i | - 0.1714+0.053 8i | -0.1363-0.1170i | 0.0272-0.1775i | |
| 0.1237+0.130 2i | - 0.1787+0.018 2i | 0.0950-0.1524i | 0.0624+0.168 4i | -0.1714-0.0538i | 0.1474-0.1026i | |
| -0.1099-0.1420i | - 0.1570+0.087 2i | 0.0624+0.168 4i | 0.1759-0.0362i | -0.0091-0.1794i | -0.1787-0.0182i | |
| 0.0950-0.1524i | -0.1099-0.1420i | - 0.1714+0.053 8i | - 0.0091+0.179 4i | 0.1650+0.070 8i | 0.1237-0.1302i | |
| 0.0272+0.177 5i | 0.1474+0.102 6i | 0.1759-0.0362i | 0.0950-0.1524i | -0.0450-0.1739i | -0.1570-0.0872i | |
| Sequence 13 | Sequence 14 | Sequence 15 | Sequence 16 | Sequence 17 | Sequence 18 | |
|---|---|---|---|---|---|---|
| -0.1363+ 0.117i | - 0.1570+0.087 2i | - 0.1714+0.053 8i | - 0.1787+0.018 2i | -0.1787-0.0182i | -0.1714-0.0538i | |
| 0.1650-0.0708i | 0.1474+0.102 6i | - 0.0091+0.179 4i | - 0.1570+0.087 2i | -0.1570-0.0872i | -0.0091-0.1794i | |
| - 0.0091+0.179 4i | -0.1363-0.1170i | 0.1759-0.0362i | - 0.0791+0.161 3i | -0.0791-0.1613i | 0.1759+0.0362i | |
| - 0.0450+0.173 9i | 0.1650+0.070 8i | 0.0950-0.1524i | -0.1363-0.1170i | - 0.1363+0.117 0i | 0.0950+0.1524i | |
| -0.0791-0.1613i | - 0.1787+0.018 2i | - 0.0450+0.173 9i | 0.1474+0.102 6i | 0.1474-0.1026i | -0.0450-0.1739i | |
| - 0.1714+0.053 8i | - 0.0791+0.161 3i | 0.0624+0.168 4i | 0.1650+0.070 8i | 0.1650-0.0708i | 0.0624-0.1684i | |
| Sequence 19 | Sequence 20 | Sequence 21 | Sequence 22 | Sequence 23 | Sequence 24 | |
|---|---|---|---|---|---|---|
| -0.157-0.0872i | -0.1363-0.1170i | -0.1099-0.1420i | -0.0791-0.1613i | -0.0450-0.1739i | -0.0091-0.1794i | |
| 0.1474-0.1026i | 0.1650+0.070 8i | 0.0272+0.177 5i | - 0.1363+0.117 0i | -0.1714-0.0538i | -0.0450-0.1739i | |
| - 0.1363+0.117 | -0.0091-0.1794i | 0.1474+0.102 6i | - 0.1714+0.053 | 0.0624-0.1684i | 0.0950+0.1524i | |
| 0i | | | 8i | | | |
| 0.1650-0.0708i | -0.0450-0.1739i | - 0.1787+0.018 2i | - 0.0091+0.179 4i | 0.1759+0.036 2i | 0.0624-0.1684i | |
| -0.1787-0.0182i | - 0.0791+0.161 3i | 0.1237+0.130 2i | 0.1650-0.0708i | -0.0091-0.1794i | -0.1714-0.0538i | |
| -0.0791-0.1613i | -0.1714-0.0538i | - 0.1570+0.087 2i | - 0.0450+0.173 9i | 0.0950+0.152 4i | 0.1759+0.0362i | |
| Sequence 25 | Sequence 26 | Sequence 27 | Sequence 28 | Sequence 29 | Sequence 30 | Sequence 31 |
|---|---|---|---|---|---|---|
| 0.0272-0.1775i | 0.0624-0.1684i | 0.0950-0.1524i | 0.1237-0.1302i | 0.1474-0.1026i | 0.1650-0.0708i | 0.1759-0.0362i |
| 0.1237-0.1302i | 0.1759+0.036 2i | 0.0624+0.168 4i | - 0.1099+0.142 0i | -0.1787-0.0182i | -0.0791-0.1613i | 0.0950-0.1524i |
| -0.1787-0.0182i | 0.1237-0.1302i | 0.0272+0.177 5i | -0.1570-0.0872i | 0.1650-0.0708i | - 0.0450+0.17 39i | -0.1099-0.1420i |
| -0.1570-0.0872i | - 0.1099+0.142 0i | 0.1237+0.130 2i | 0.1474-0.1026i | -0.0791-0.1613i | - 0.1714+0.05 38i | 0.0272+0.177 5i |
| - 0.1099+0.142 0i | 0.0950+0.152 4i | 0.1759-0.0362i | 0.0272-0.1775i | -0.1570-0.0872i | - 0.1363+0.11 70i | 0.0624+0.168 4i |
| 0.1474-0.1026i | 0.0272-0.1775i | -0.1099-0.1420i | -0.1787-0.0182i | - 0.1363+0.117 0i | - 0.0091+0.17 94i | 0.1237+0.130 2i |
.

22. The apparatus according to any one of claims 13 to 21, wherein the indication information of the first sequence comprises an index of the first sequence in the sequence set.

23. The apparatus according to any one of claims 13 to 22, wherein the processing module is further configured to:
obtain the indication information of the sequence set.

24. The apparatus according to claim 23, wherein the indication information of the sequence set comprises *N* and K.

25. A communication apparatus, comprising a processor, wherein the processor is configured to execute a computer program or instructions, to implement the method according to any one of claims 1 to 12.

26. A chip, wherein the chip comprises a logic circuit, and the logic circuit is configured to perform the method according to any one of claims 1 to 12.

27. A computer-readable storage medium, wherein the storage medium stores a computer program or instructions, and when the computer program or the instructions are executed by a communication apparatus, the method according to any one of claims 1 to 12 is implemented.

28. A computer program product, wherein when the computer program product is executed by a computer, the computer is caused to perform the method according to any one of claims 1 to 12.

29. A communication apparatus, comprising a unit or a module configured to perform the method according to any one of claims 1 to 12.
